# EUROPEAN PATENT SPECIFICATION

(11) **EP 3 890 247 B1**
(45) Date of publication and mention of the grant of the patent: **09.07.2025**
(21) Application number: 19889785.2
(22) Date of filing: 08.11.2019
(51) Int. Cl.: H04L 12/28, H04L 12/46, G05B 19/4155, G05B 19/418, H04L 12/40

(54) **CONTROL DEVICE, SUPPORT DEVICE, AND COMMUNICATION SYSTEM**
STEUERUNGSVORRICHTUNG, UNTERSTÜTZUNGSVORRICHTUNG UND KOMMUNIKATIONSSYSTEM
DISPOSITIF DE COMMANDE, DISPOSITIF DE SUPPORT ET SYSTÈME DE COMMUNICATION

(30) Priority: 28.11.2018 JP 2018222648
(43) Date of publication of application: 06.10.2021
(73) Proprietor: OMRON Corporation, Shiokoji-dori, Shimogyo-ku, Kyoto-shi Kyoto 600-8530 (JP)
(72) Inventor: TAHARA, Yutaka, Kyoto-shi, Kyoto 600-8530 (JP); HALL, Johnston, Toronto, ON M1H3E3 (CA)
(74) Representative: Becker, Eberhard
(86) International application number: PCT/JP2019/043973
(87) International publication number: WO 2020/110668

(56) References cited:
- EP-A1- 1 533 670
- EP-A1- 3 309 818
- EP-A1- 3 594 768
- WO-A1-2014/133015
- WO-A1-2016/117079
- WO-A1-2016/157477
- WO-A1-2018/164107
- JP-A- 2007 053 485
- US-A1- 2009 083 589
- "Industrial automation PLC, control panels, SCADA, engineering software, wireless", INTERNET CITATION, 1 November 2012 (2012-11-01), pages 1 - 98, XP002729466, Retrieved from the Internet <URL:http://www05.abb.com/global/scot/scot397.nsf/veritydisplay/83f5a1ed51356379c1257c210039f2f5/$file/1SBC125003C0205.pdf> [retrieved on 20140902]

## Description

### [Technical Field]

The present invention relates to a technology for supporting setting work regarding communication between a control device and another device.

### [Background Art]

A control device such as a programmable logic controller (PLC) has been introduced at various manufacturing sites. Such a control device is a kind of computer, and a control program designed according to a manufacturing device, a manufacturing facility, or the like is executed. The control device is connected to various devices inside or outside a factory via a relay device.

For example, Japanese Patent No. 6407494 (Patent Literature 1) discloses a control device communicatively connected to a cloud system outside a factory via a router that is an example of a relay device.

Further, International Publication No. 2016/157477 (Patent Literature 2) discloses a control device communicatively connected to another control device via a router that is an example of a relay device.

Patent literature EP 3309818 A1 relates to a relay device and manufacturing system that relays communication based on SECS/GEM protocol to a manufacturing system using a different communication protocol, and enables integrated management via a SECS/GEM host. Relay device performs protocol conversion between a SECS/GEM protocol and an original protocol that is a non-SECS/GEM protocol, and transfers data transmitted between user host and manufacturer host and so on. Also, relay device performs transfer processing based on a port correspondence database that specifies local IP addresses of manufacturer host and the like and TCP protocol port numbers corresponding to these IP addresses.

Patent literature WO 2018/164107 A1 relates to a management device which transmits and receives information to and from a relay device capable of communication with field equipment installed in a plant, wherein the management device comprises: a memory unit having a first settings storage area for storing first setting information that is the setting information of the relay device, and a second settings storage area for storing second setting information that is the setting information of the field equipment; and a first settings management unit for writing the first setting information and the second setting information to the relay device.

Patent literature US 2009/083589 A1 relates to a system provided with a programmable logic controller (PLC). The system includes a serial communications port connected to the PLC. The system includes a controller adapted to enable a customer application program to access and control the serial communications port.

Patent literature EP 1533670 A1 relates to a communication interface, as a part of a programmable controller, that serves to carry out command-response communications with an external general-purpose device connected through a specified communication line according to an execution command from a user program for controlling a control device connected to the programmable controller or according to a preliminarily stored program. When a communication command addressed to an external general-purpose device is received from a peripheral device, it is converted appropriately for communication through a serial line. When it is relayed to the external general-purpose device, it is judged whether it is in a wait condition for a response and the relaying is temporarily stopped. When the wait condition ends, communication is carried out with the external general-purpose and the converted command is relayed to the external general-purpose device.

Non-patent literature "Industrial automation PLC, control panels, SCADA, engineering software, wireless", INTERNET CITATION, 1 November 2012, pages 1-98, XP002729466, relates to techniques of industrial automation PLC.

### [Citation List]

### [Patent Literature]

[Patent Literature 1]
   Japanese Patent No. 64074494
[Patent Literature 2]
   International Publication No. 2016/157477

### [Summary of Invention]

### [Technical Problem]

However, settings for a relay device are complicated, and it is necessary for a setting method to be learned. That is, in order to design and operate a network in a factory, it is necessary to educate not only a person who designs a network but also a person who operates the network designed at a site in a factory. Therefore, complexity of settings that are performed for a relay device is one factor that makes it difficult to build a network in the factory.

An objective of the present invention is to solve the above problems and facilitate settings that are performed for a relay device. The invention is set out in the appended set of claims. The following disclosure serves a better understanding of the present invention.

### [Solution to Problem]

According to an example of the present disclosure, a control device capable of communication with other devices via a relay device is provided. The control device includes a storage unit configured to store a user program including at least one instruction for performing communication settings regarding communication via the relay device; and a communication setting unit configured to perform transmission or reception of a command to or from the relay device on the basis of fulfillment of an execution condition for the instruction and perform the communication settings indicated by the instruction.

According to this disclosure, even when a user does not know a method of transmitting or receiving commands to and from the relay device, the control device executes a process according to designated setting content when the communication settings are designated, making it possible to easily perform communication settings for the relay device.

In the above-described disclosure, a protocols for the transmission or reception of the command to or from the relay device differs depending on a type of the relay device, and the communication setting unit performs the transmission or reception of the command to or from the relay device according to the protocol corresponding to the type of the relay device.

According to this disclosure, it is possible to support various relay devices and it is possible for the user to use a plurality of types of relay devices.

In the above-described disclosure, the storage unit stores conversion information including the protocol for each type of the relay device. The control device further includes a conversion information specifying unit configured to determine the type of the relay device on the basis of device information included in the relay device and specify the conversion information on the basis of the type of the relay device. The communication setting unit performs the transmission or reception of the command to or from the relay device on the basis of the conversion information specified by the conversion information specifying unit.

According to this disclosure, a user can perform the communication settings without being aware of a type of the relay device.

In the above-described disclosure, the conversion information is stored in the storage unit for each piece of content of the instruction. The conversion information specifying unit specifies the conversion information on the basis of an instruction for which an execution condition is fulfilled and the type of the relay device.

According to this disclosure, it is not necessary for the control device to store a program according to content of the instruction and a type of the relay device, making it possible to reduce an amount of data that is stored in the storage unit.

In the above-described disclosure, the user program includes an instruction related to the communication settings and a preferential instruction having a higher priority than the instruction. The control device further comprises a fixed-cycle task execution unit configured to repeatedly execute the preferential instruction at a fixed cycle. The communication setting unit issues the instruction related to the communication settings so as not to interfere with the execution of the preferential instruction.

According to this disclosure, it is possible to execute an instruction related to communication settings without interfering with an instruction having a high priority.

In the above-described disclosure, the control device is communicatively connected to a first apparatus configured to manage a first field device group and a second apparatus configured to manage a second field device group via the relay device. The storage unit stores a first recipe including a condition for moving the first field device group and a second recipe including a condition for moving the second field device group. The user program includes an instruction for switching of a device serving as a connection destination and an instruction to switch the recipe according to the switching.

According to this disclosure, it is possible to easily perform setup change. According to another example of the present disclosure, a support device for supporting development of a user program for a control device capable of communication with other devices via a relay device is provided. The support device includes a storage unit configured to store at least one instruction for performing communication settings regarding communication via the relay device; and a control unit configured to combine the at least one instruction stored in the storage unit and generate the user program. The control unit creates the user program in a format enabling the control device to transmit or receive a command to or from the relay device at the time of execution of the instruction.

According to this disclosure, even when a user does not know a method of transmitting or receiving commands to and from the relay device, it is possible to create a user program for easily performing the communication settings for the relay device.

According to another example of the present disclosure, a communication system including a relay device, and a control device capable of communicating with other devices via the relay device is provided. The control device includes a storage unit configured to store a user program including at least one instruction for performing communication settings regarding communication via the relay device; and a communication setting unit configured to perform transmission or reception of a command to or from the relay device on the basis of fulfillment of an execution condition for the instruction and perform the communication settings indicated by the instruction.

According to this disclosure, even when a user does not know a method of transmitting or receiving commands to and from the relay device, the control device executes a process according to designated setting content when the communication settings are designated, making it possible to easily perform communication settings for the relay device.

### [Advantageous Effects of Invention]

An environment in which a setting to be performed on the relay device can be easily performed is provided.

### [Brief Description of Drawings]

Fig. 1 is a diagram schematically illustrating an application situation of a control device according to the present embodiment.
Fig. 2 is a diagram illustrating a system configuration of a communication system according to embodiment 1.
Fig. 3 is a schematic diagram illustrating an example of a device configuration of a CPU unit.
Fig. 4 is a schematic diagram illustrating a software configuration of the CPU unit.
Fig. 5 is a schematic diagram illustrating an example of a device configuration of a support device.
Fig. 6 is a schematic diagram illustrating a software configuration of the support device.
Fig. 7 is a diagram illustrating a functional configuration of a controller that is realized by execution of a program related to communication setting.
Fig. 8 is a diagram illustrating an example of a user program incorporating a function block related to communication setting.
Fig. 9 is a diagram illustrating an example of a user program incorporating a function block related to communication setting.
Fig. 10 is a diagram illustrating a timing at which a fixed-cycle task execution unit and a communication setting unit execute a process when the user program illustrated in Figs. 8 and 9 is executed.
Fig. 11 is a diagram illustrating exchange of commands between the communication setting unit and a setting information updating unit.
Fig. 12 illustrates an example of instructions prepared in the support device.
Fig. 13 is a diagram illustrating a modification example of a communication system.
Fig. 14 is a diagram illustrating a schematic configuration of a control device according to embodiment 2.

### [Description of Embodiments]

Hereinafter, embodiments according to the present invention will be described with reference to the drawings. In the following description, the same parts and components are denoted by the same reference signs. Names and functions thereof are the same. Therefore, detailed description of these will not be repeated. Respective embodiments and respective modification examples to be described below may be appropriate selectively combined.

### §1 Application example

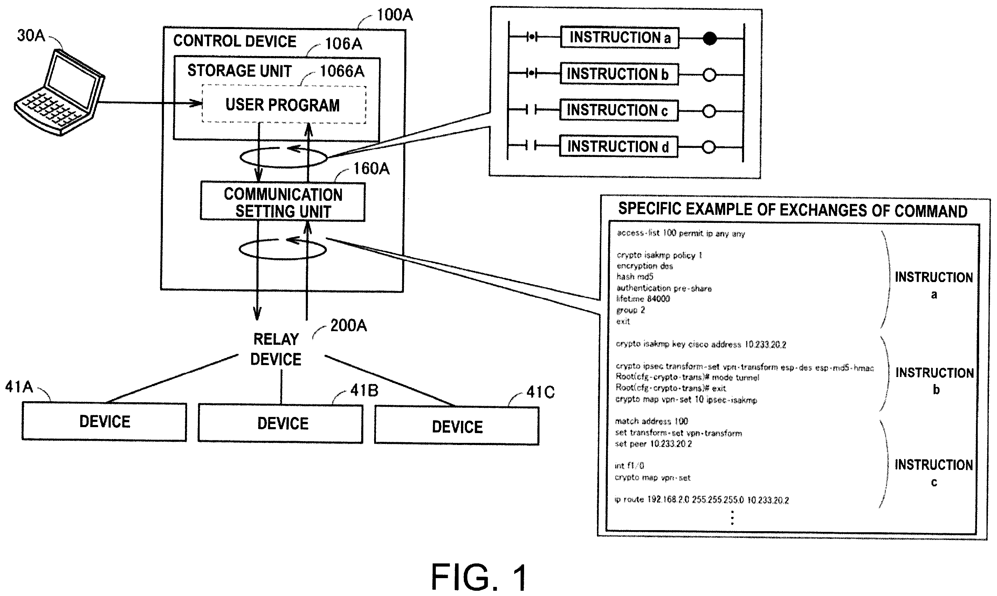

An example of a situation in which the present invention is applied will be described with reference to Fig. 1. Fig. 1 is a diagram schematically illustrating an application situation of a control device 100A according to the present embodiment. The control device 100A is communicatively connected to other devices (devices 41A, 41B, and 41C) via a relay device 200A.

The control device 100A includes a storage unit 106A in which a user program 1066A including at least one instruction for performing communication settings which are settings regarding communication with other devices is stored, and a communication setting unit 160A that performs the communication setting.

The communication settings are settings regarding communication with another device, which are settings that are performed on the relay device 200A.

The communication setting unit 160A performs transmission or reception of a command to or from the relay device on the basis of the fact that the instruction execution condition has been fulfilled, and performs the communication settings indicated by the instruction.

For example, in the example illustrated in Fig. 1, the storage unit 106A stores the user program 1066A in which an execution condition for instruction a is fulfilled, an execution condition for instruction b is fulfilled when the execution of instruction a is completed, an execution condition for instruction c is fulfilled when the execution of instruction b is completed, and an execution condition for instruction d is fulfilled when the execution of instruction c is completed.

This user program 1066A is created by, for example, a development environment that is provided by a support device 30A. The support device 30A is realized, for example, by using hardware complying with a general-purpose architecture.

The communication setting unit 160A performs command exchange with the relay device 200A when executing instruction a, as illustrated in Fig. 1. When the execution of instruction a is completed, the communication setting unit 160A executes instruction b, and performs command exchange with the relay device 200A when executing instruction b. Similarly, the communication setting unit 160A performs command exchange with the relay device 200A when executing instruction c and instruction d.

Thus, in the communication setting, although command exchange between the relay device 200A and the control device 100A is necessary, the communication setting unit 160A performs exchange of a command when the instruction is executed, and thus a user can perform communication settings for the relay device 200A without learning about detailed command exchange that is performed between the relay device 200A and the control device 100A.

### §2 Configuration example

### [Embodiment 1]

### <A. System configuration of communication system>

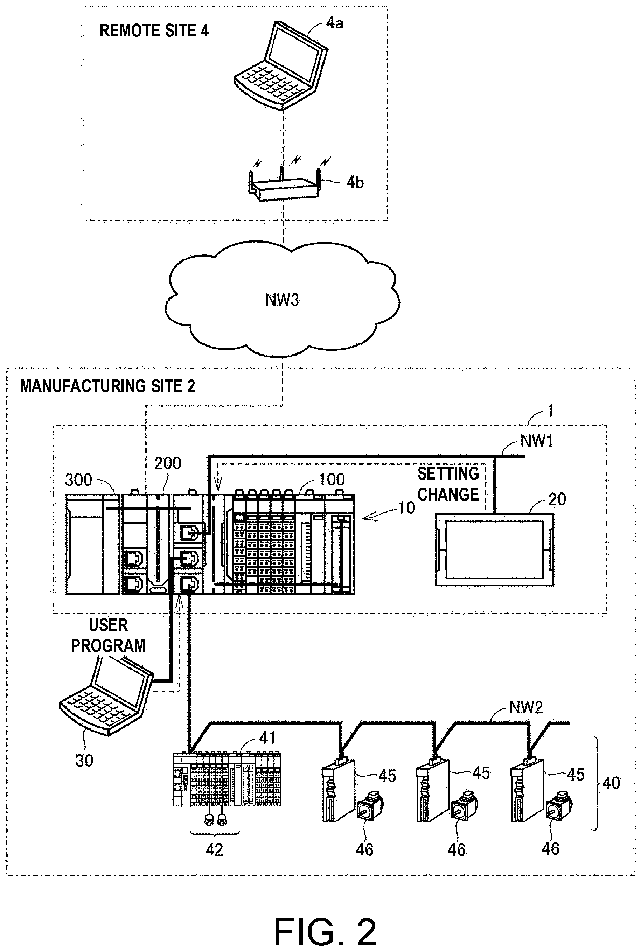

Fig. 2 is a diagram illustrating a system configuration of a communication system 1 according to embodiment 1. The communication system 1 is a system that is installed at a manufacturing site 2 in which manufacturing work is actually performed. The communication system 1 is used by a person (hereinafter also referred to as a "user") working at the manufacturing site 2. The communication system 1 provides an environment for performing settings regarding communication (hereinafter also referred to as "communication settings") between a remote site 4 allowing the manufacturing site 2 to be remotely viewed and operated and the manufacturing site 2.

The communication system 1 includes a controller 10 that controls a manufacturing apparatus, a robot, and the like, and a touch panel type human machine interface (HMI) 20 that a user operates to perform communication settings.

The controller 10 is communicatively connected to the HMI 20 via an information network NW1, and performs the communication settings according to a setting command output from the HMI 20 when the user operates the HMI 20.

The controller 10 is connected to a field device group 40 via a control network NW2. The field device group 40 includes a device that collects data from a control target, or a manufacturing device, a production line, and the like related to the control (hereinafter also collectively referred to as a "field"). As a device for collecting such data, an input relay, various sensors, and the like are assumed. The field device group 40 further includes a device that has some effect on the field on the basis of an instruction generated by the controller 10. As a device that has some effect on such a field, an output relay, a contactor, a servo driver, a servo motor, or any other actuator is assumed.

In the example illustrated in Fig. 2, the field device group 40 includes a remote input/output (I/O) device 41, a relay group 42, a servo driver 45, and a servo motor 46, which are connected to the controller 10.

The controller 10 includes a CPU unit 100, a repeater unit 200, and a power supply unit 300. The power supply unit 300 supplies power to various devices constituting the controller 10, such as the CPU unit 100.

The CPU unit 100 corresponds to a control device that executes a control calculation for a control target. The CPU unit 100 is connected to a computer 4a of the remote site 4 via the repeater unit 200. The CPU unit 100 executes a user program that is created depending on a control purpose of the user to control the control target. The CPU unit 100 can set various devices connected to the CPU unit 100 as control targets. Specifically, the CPU unit 100 can set the repeater unit 200 as a control target and can change a state of the repeater unit 200. Specifically, the CPU unit 100 can perform a setting of the repeater unit 200. By the setting of the repeater unit 200 being performed, communication settings between the remote site 4 and the manufacturing site 2 are performed. In embodiment 1, a user program related to the communication settings is executed according to a setting change command that is output from the HMI 20 by the user operating the HMI 20.

The user program is created by a development environment that is provided by the support device 30. The CPU unit 100 includes an interface for connection to the support device 30. The user program created by the support device 30 is installed in the CPU unit 100 from the support device 30 and executed by the CPU unit 100. The user program is described using a programming language defined as a programming language for a PLC application in the international standard IEC61131-3. Specifically, the user program is a program described using one or a plurality of languages among five types of languages including a ladder diagram (LD), a function block diagram (FBD), a sequential function chart (SFC), an command list (IL), and structured text (ST).

The repeater unit 200 is a control device having a router function, and provides a mediating function of mediating exchange of data between the CPU unit 100 and other devices. In the example illustrated in Fig. 2, the repeater unit 200 is communicatively connected to a network in the remote site 4 via a network NW3. The computer 4a is connected to the network in the remote site 4. That is, the repeater unit 200 mediates exchange of data between the CPU unit 100 and the computer 4a. More specifically, the repeater unit 200 can communicate with a repeater 4b to which the computer 4a is connected via the network NW3.

The network NW3 is assumed to be the Internet, a virtual private network (VPN), a dedicated line, or a communication line that is a combination of these, and may be any one of a wired network and a wireless network. In embodiment 1, the network NW3 is a VPN.

In a network that enables communication between the CPU unit 100 and the repeater unit 200, as an example, "192.168.1.1/24" is assigned as an IP address to the CPU unit 100. "192.168.1.254/24" is assigned as an IP address to the repeater unit 200.

In the network NW3, as an example, "10.0.0.1" is assigned as an IP address to the repeater unit 200. "20.0.0.1" is assigned as an IP address to the repeater 4b.

In a network that enables communication between the repeater 4b and the computer 4a, as an example, "192.168.2.254/24" is assigned as an IP address to the repeater 4b. "192.168.2.1/24" is assigned as an IP address to the computer 4a.

### <B. Device configuration of CPU unit>

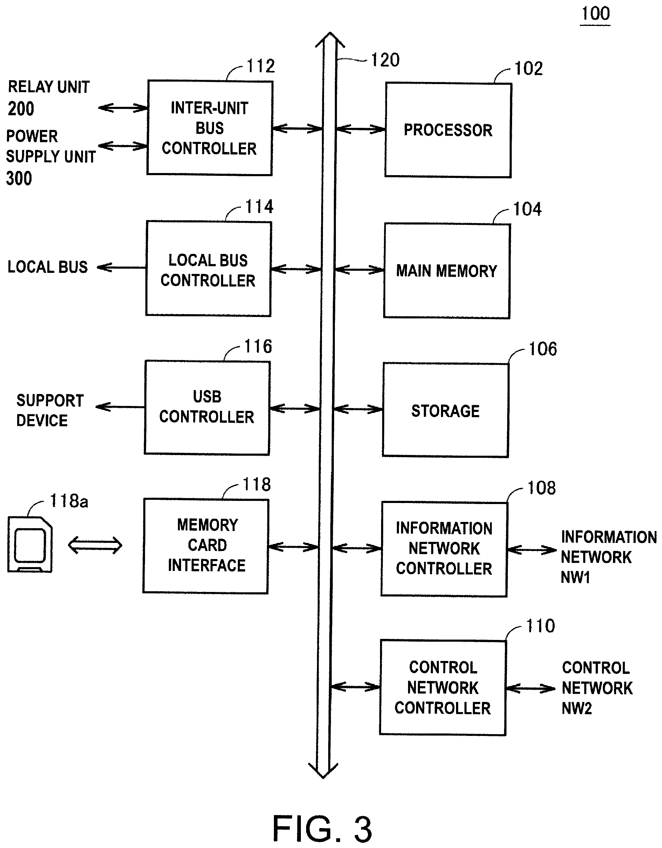

Fig. 3 is a schematic diagram illustrating an example of a device configuration of the CPU unit 100. The CPU unit 100 includes a processor 102, a main memory 104, a storage 106, an information network controller 108, a control network controller 110, an inter-unit bus controller 112, a local bus controller 114, a USB controller 116, and a memory card interface 118. These components are connected via a processor bus 120.

The processor 102 corresponds to an arithmetic processing unit that executes a control calculation related to standard control, and includes a central processing unit (CPU), a graphics processing unit (GPU), and the like. As the processor 102, a configuration having a plurality of cores may be adopted, or a plurality of processors 102 may be disposed. Thus, the CPU unit 100 includes one or a plurality of processors 102 and/or a processor 102 including one or a plurality of cores. The processor 102 reads a program stored in the storage 106, loads the program into the main memory 104, and executes the program to realize a control calculation depending on the control target and various processes that will be described below.

The main memory 104 includes a volatile storage device such as a dynamic random access memory (DRAM) or a static random access memory (SRAM). The storage 106 includes, for example, a non-volatile storage device such as a solid state drive (SSD) or a hard disk drive (HDD).

The storage 106 stores various programs that are executed by the processor 102 and various pieces of data necessary for execution of the programs.

The information network controller 108 mediates communication with the HMI 20 via the information network NW1 (see Fig. 2). As the information network NW1, for example, a network protocol such as EtherNet/IP (registered trademark) having guaranteed punctuality is preferable.

The control network controller 110 mediates communication with the field device group 40 via the control network NW2 (see Fig. 2). As the control network NW2, for example, a network protocol such as EtherCAT (registered trademark) having guaranteed punctuality is preferable.

The inter-unit bus controller 112 is a device for connection to other units enabling data communication. In embodiment 1, the repeater unit 200 and the power supply unit 300 are connected via the inter-unit bus controller 112 of the CPU unit 100. As the inter-unit bus controller 112, for example, a device complying with a known data transmission standard (for example, PCI Express) can be adopted.

The local bus controller 114 mediates communication with an input and output unit directly mounted in the CPU unit 100 via a local bus (not illustrated).

The USB controller 116 exchanges data with the support device 30 or the like via a USB connection.

The memory card interface 118 receives a memory card 118a, which is an example of a removable recording medium. The memory card interface 118 can write data to the memory card 118a and read various pieces of data from the memory card 118a.

### <C. Software configuration of CPU unit>

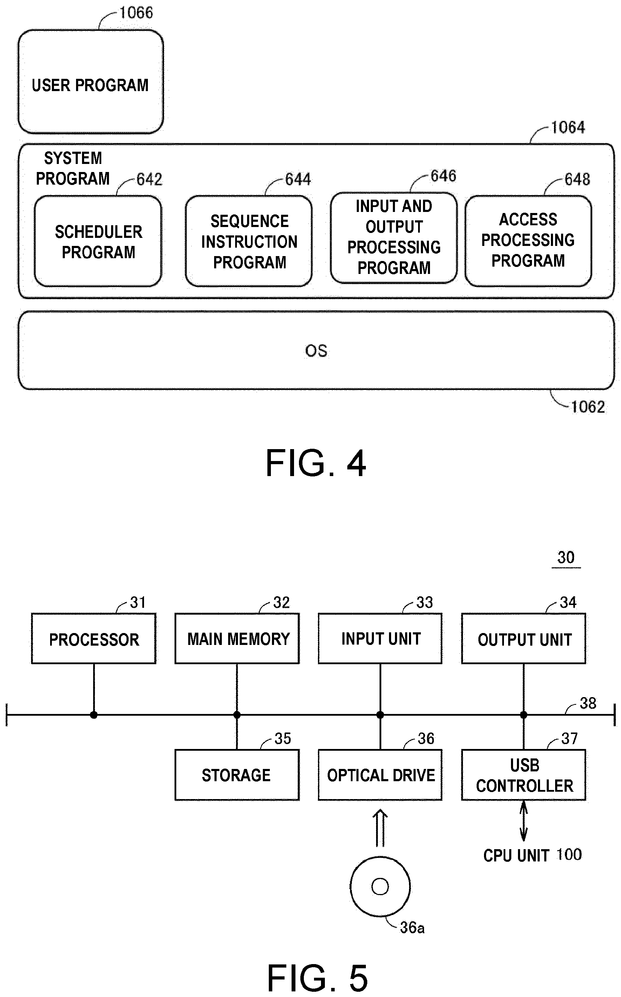

Fig. 4 is a schematic diagram illustrating a software configuration of the CPU unit 100. In Fig. 4, an example of software groups for providing various functions according to embodiment 1 is illustrated. Instruction codes included in the software groups are stored in the storage 106, read at an appropriate timing, and executed by the processor 102 of the CPU unit 100.

Examples of the software executed by the CPU unit 100 basically include an operating system (OS) 1062, a system program 1064, and a user program 1066.

The OS 1062 is designed depending on a computer architecture of the CPU unit 100, and provides a basic execution environment allowing the processor 102 to execute the system program 1064 and the user program 1066. The OS 1062 is typically provided by a controller manufacturer or a specialized software company.

The system program 1064 is a software group for providing a function of the controller 10. Specifically, the system program 1064 includes a scheduler program 642, a sequence instruction program 644, an input and output processing program 646, and an access processing program 648. Each program included in the system program 1064 is typically provided by a controller manufacturer, a specialized software company, or the like.

The user program 1066 is created depending on the control purpose of the user. In embodiment 1, the user program 1066 is generated, for example, in the support device 30. The user program 1066 is transferred from the support device 30 to the CPU unit 100 via a USB cable and stored in the storage 106.

The user program 1066 cooperates with the sequence instruction program 644 to realize the control purpose in the user. That is, the user program 1066 uses instructions, functions, function modules, and the like that are provided by the sequence instruction program 644 to realize a programmed operation.

The scheduler program 642 causes the processor 102 to execute a program according to a predetermined priority. The program includes a program of which an execution timing is highly required to be guaranteed, and a program of which an execution timing is less required to be guaranteed. For example, a program for operating a plurality of control devices in cooperation has an execution timing highly required to be guaranteed. On the other hand, a program for performing communication settings has an execution timing less required to be guaranteed. The program of which the execution timing is highly required to be guaranteed is set in a fixed-cycle task that is repeatedly executed at a fixed cycle. On the other hand, the program of which the execution timing is less required to be guaranteed is executed in a free time of the processor 102 that is not executing a fixed-cycle task not to interfere with the execution of the program set in the fixed-cycle task. Here, the "task" refers to a basic unit that is a target of control for allocating computing resources. The scheduler program 642 controls process start, process interruption, and process restart after the process interruption for each program that is executed by the processor 102.

The sequence instruction program 644 includes an instruction code group for calling an entity of the sequence instruction designated in the user program 1066 with the execution of the user program 1066 and realizing content of the instruction.

The input and output processing program 646 is a program for managing acquisition of input data and transmission of output data from and to the field device connected to the controller 10.

The access processing program 648 includes an instruction code group for realizing a process necessary for performing the communication settings with the execution of the user program 1066.

### <D. Device configuration of support device>

Fig. 5 is a schematic diagram illustrating an example of a device configuration of the support device 30. As an example, the support device 30 is realized by using hardware complying with a general-purpose architecture (for example, a general-purpose personal computer).

The support device 30 includes a processor 31, a main memory 32, an input unit 33, an output unit 34, a storage 35, an optical drive 36, and a USB controller 37 which is an example of a communication interface. These components are connected via a processor bus 38.

The processor 31 includes a CPU, a GPU, or the like, reads a program stored in the storage 35, loads the program into the main memory 32, and executes the program to realize various processes as described below.

The main memory 32 includes a volatile storage device such as a DRAM or a SRAM. The storage 35 includes, for example, a non-volatile storage device such as an HDD or an SSD.

The storage 35 stores various pieces of data that are used for creation of the user program 1066, and a program for supporting development of the user program 1066.

The input unit 33 includes a keyboard, a mouse, and the like, and receives user operations with respect to the support device 30.

The output unit 34 includes a display, various indicators, a printer, and the like, and outputs, for example, a processing result from the processor 31. In embodiment 1, it is assumed that the output unit 34 includes a display.

The USB controller 37 exchanges data with the CPU unit 100 or the like via a USB connection.

The support device 30 includes the optical drive 36, and a program is read from a recording medium 36a (for example, an optical recording medium such as a digital versatile disc (DVD)) that non-transiently stores a computer-readable program and installed in the storage 35 or the like.

A support program 354, the function block 400, and the like may be installed in the support device 30 via the computer-readable recording medium 36a, but may also be downloaded from a server device or the like on a network and installed. Further, a function provided by the support device 30 according to the present embodiment may be realized by using some of modules provided by the OS.

Although the configuration example in which the functions required as the support device 30 are provided by the processor 31 executing the program has been illustrated in Fig. 5, some or all of these provided functions may be implemented by a dedicated hardware circuit (for example, an ASIC or an FPGA).

### <E. Software configuration of support device 30>

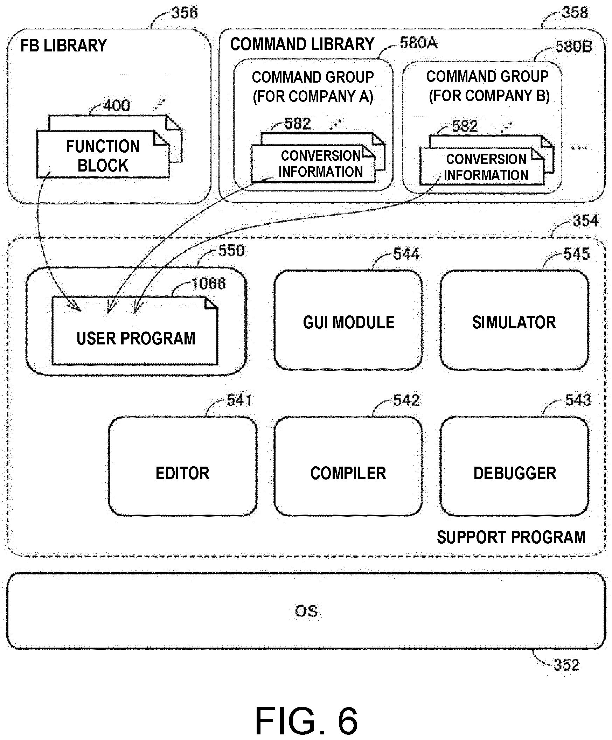

Fig. 6 is a schematic diagram illustrating a software configuration of the support device 30. In Fig. 6, an example of software groups for providing various functions according to embodiment 1 is illustrated. Instruction codes included in the software groups are read at an appropriate timing and executed by the processor 31 of the support device 30.

Software that is executed by the support device 30 includes at least an OS 352 and the support program 354. These programs are stored in the storage 35. Further, data that is used for execution of the program includes a function block library (hereinafter also referred to as a "FB library") 356 and a command library 358 and is stored in the storage 35.

The OS 352 provides a basic environment in which the support program 354 can be executed. The support program 354 is a program for realizing the function provided by the support device 30, and provides a function for creating the user program 1066.

The FB library 356 is a library of function blocks which are program components defined for each piece of instruction information for generating the user program 1066. The FB library 356 includes a function block 400 corresponding to instruction required for setting of communication. In embodiment 1, for example, a function block corresponding to an instruction to write a VPN setting between the manufacturing site 2 and the remote site 4 to the repeater unit 200, a function block corresponding to an instruction to read the VPN setting written to the repeater unit 200, and a function block corresponding to an instruction to enable the setting written to the repeater unit 200 are included in the FB library 356.

The user can input parameters necessary for execution of the function blocks 400 via the input unit 33, and combines the function blocks 400 for which the parameters are input to create the user program 1066.

The command library 358 is a library of conversion information 582 including a protocol for transmission or reception of commands that is performed between the repeater unit 200 and the CPU unit 100. More specifically, the protocol is information including a procedure for transmission or reception of commands, and types of commands. The CPU unit 100 performs communication settings for the repeater unit 200 according to the protocol included in the conversion information 582.

The conversion information 582 is stored in the command library 358 as a command group 580 for each type of command that is supported by the repeater unit 200. For example, a command group 580A for conversion to a command of company A and a command group 580B for conversion to a command of company B are stored in the command library 358. Each command group 580 includes the conversion information 582 for converting the function block 400 to a corresponding command.

The function block 400 and command library 358, for example, are distributed in a state of being stored in the recording medium 36a by a controller manufacturer or a specialized software company. The user can install the function block 400 and the command library 358 stored in the recording medium 36a, in the support device 30, to use the function block 400 and the command library 358.

The support program 354 includes an editor 541, a compiler 542, a debugger 543, a graphical user interface (GUI) module 544, a simulator 545, and a data storage unit 550.

The editor 541 provides functions such as input and editing for creating a source program of the user program 1066. More specifically, the editor 541 provides functions of storing and editing the created source program, in addition to the function of creating the source program of the user program 1066 by the user operating the input unit 33 including a keyboard or a mouse. The editor 541 creates the source program of the user program 1066 using the function block 400 selected from the FB library 356 according to an operation of a designer.

The compiler 542 provides a function of compiling the source program to generate the user program 1066 in a program format that can be executed by the controller 10.

The debugger 543 provides a function for performing debugging on the source program of the user program 1066.

The GUI module 544 has a function of providing a user interface screen allowing the designer to input various pieces of data, parameters, or the like. The user interface screen is displayed on the output unit 34 including a display.

The simulator 545 constructs an environment for simulating the execution of the program in the controller 10 in the support device 30.

The created user program 1066 is stored in the data storage unit 550. The user program 1066 includes one or a plurality of function blocks 400. The user program 1066 stored in the data storage unit 550 is sent to the CPU unit 100 via the USB cable and set. In this case, the conversion information 582 corresponding to the function block 400 included in the user program 1066 is also sent to the CPU unit 100 and set. In embodiment 1, the support device 30 extracts the conversion information 582 corresponding to the function block 400 from each command group 580, and sends all pieces of extracted conversion information 582 to the CPU unit 100.

Accordingly, it is possible to create a user program for performing communication settings using an IEC program used in the field of FA. As a result, a designer of the IEC program can create the user program for performing a setting related to a communication function without learning for newly setting a communication function.

In the example illustrated in Fig. 6, it is assumed that the FB library 356 and the command library 358 are stored in the storage 35 of the support device 30, but at least one of the FB library 356 and the command library 358 may be stored in a server device that can be connected to the support device 30 via a network.

### <F. Functional configuration realized through execution of program related to communication setting>

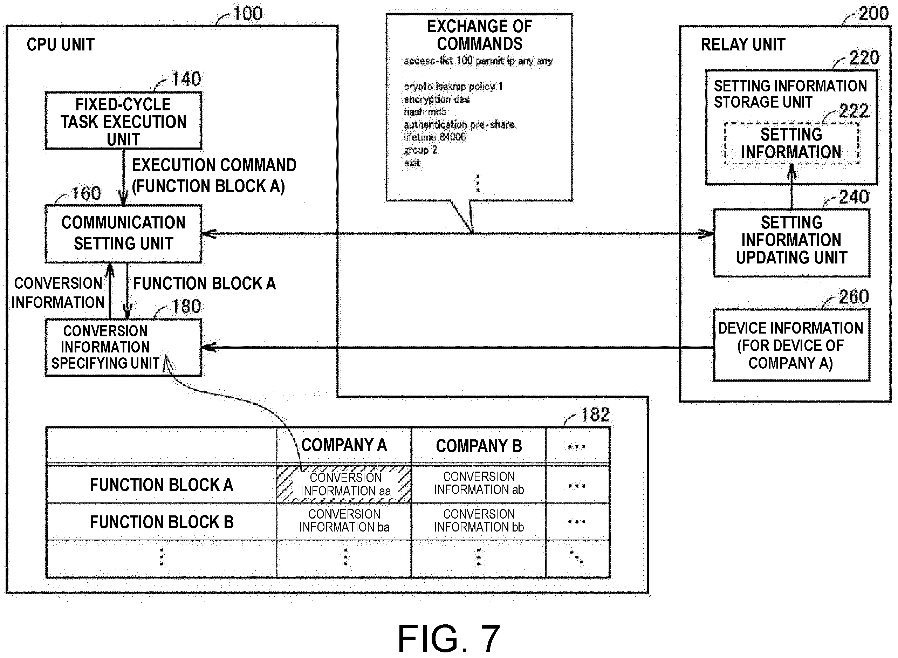

Fig. 7 is a diagram illustrating a functional configuration of the controller 10 that is realized through execution of a program related to communication setting.

Various functions illustrated in Fig. 7 are realized by an execution condition for the function block 400 regarding the communication settings included in the user program 1066 being fulfilled and an instruction indicated by the function block 400 being executed by the processor 102.

The CPU unit 100 includes a fixed-cycle task execution unit 140, a communication setting unit 160, and a conversion information specifying unit 180. The repeater unit 200 includes a setting information storage unit 220 and a setting information updating unit 240.

The fixed-cycle task execution unit 140 repeatedly executes a fixed-cycle task at a fixed cycle. The fixed-cycle task execution unit 140 determines at least whether or not to execute the instruction indicated by the function block 400. When the execution condition for the instruction indicated by the function block 400 is fulfilled, the fixed-cycle task execution unit 140 instructs the communication setting unit 160 to execute the instruction indicated by the function block 400.

The conversion information specifying unit 180 specifies a command that can be interpreted by the repeater unit 200 connected to the CPU unit 100, and specifies the conversion information 582 for conversion to the specified command. More specifically, the conversion information specifying unit 180 acquires device information 260 of the repeater unit 200 from the repeater unit 200 and specifies the conversion information 582 on the basis of the device information 260. As the device information 260, for example, a media access control (MAC) address is assumed.

More specifically, when the user program 1066 is installed from the support device 30, the conversion information 582 corresponding to each of the one or a plurality of function blocks 400 included in the user program 1066 is extracted from each command group 580, and installed in the CPU unit 100. A set of the conversion information 582 is referred to as a conversion information group 182. The conversion information specifying unit 180 specifies the conversion information 582 from the conversion information group 182 on the basis of the function block 400 executed by the communication setting unit 160 and the specified device information 260. For example, when the repeater unit 200 connected to the CPU unit 100 interprets the command of company A and the communication setting unit 160 executes the instruction of the function block A, the conversion information specifying unit 180 specifies conversion information aa.

The communication setting unit 160 performs exchange of a command with the repeater unit 200 on the basis of the conversion information 582 specified by the conversion information specifying unit 180 to execute the instruction indicated by the function block 400.

The fixed-cycle task execution unit 140 executes the task at a fixed cycle, and the task includes a process of acquiring an execution situation of the instruction of the communication setting unit 160. That is, the fixed-cycle task execution unit 140 monitors execution of the instruction that is performed by the communication setting unit 160.

The setting information storage unit 220 of the repeater unit 200 stores information on the communication setting. While commands are exchanged between the repeater unit 200 and the CPU unit 100, the information on the communication settings (setting information 222) stored in the setting information storage unit 220 is modified.

The setting information updating unit 240 of the repeater unit 200 performs command exchange with the communication setting unit 160, and stores the setting information 222 in the setting information storage unit 220 while exchanging commands.

At the manufacturing site 2, devices such as the field device group 40 are mainly controlled by the CPU unit 100. In embodiment 1, the CPU unit 100 converts the instructions into a command that can be exchanged with the repeater unit 200, which is a relay device, and then performs exchange of data with the repeater unit 200 to perform communication settings of the repeater unit 200. That is, the communication system 1 of embodiment 1 can change a state of the repeater unit 200, which is a relay device that mediates communication, from the CPU unit 100 that is a control device that controls a device such as the field device group 40.

Therefore, a user working at the manufacturing site 2 can change the state of the repeater unit 200, which is a relay device, similarly when a device such as the field device group 40 is controlled, without specialized knowledge about security or communication. In embodiment 1, the CPU unit 100 can change the communication settings as a state of the relay device. Further, in embodiment 1, a method of executing a user program is adopted as a method of changing the state of the repeater unit 200 from the CPU unit 100.

### <G. Program example>

### (G1. User program)

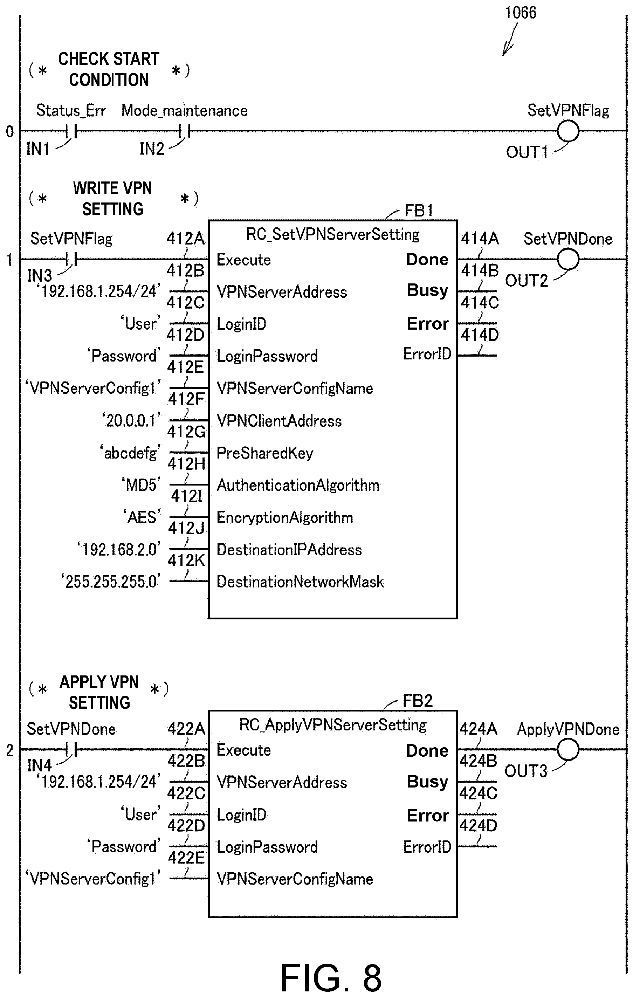

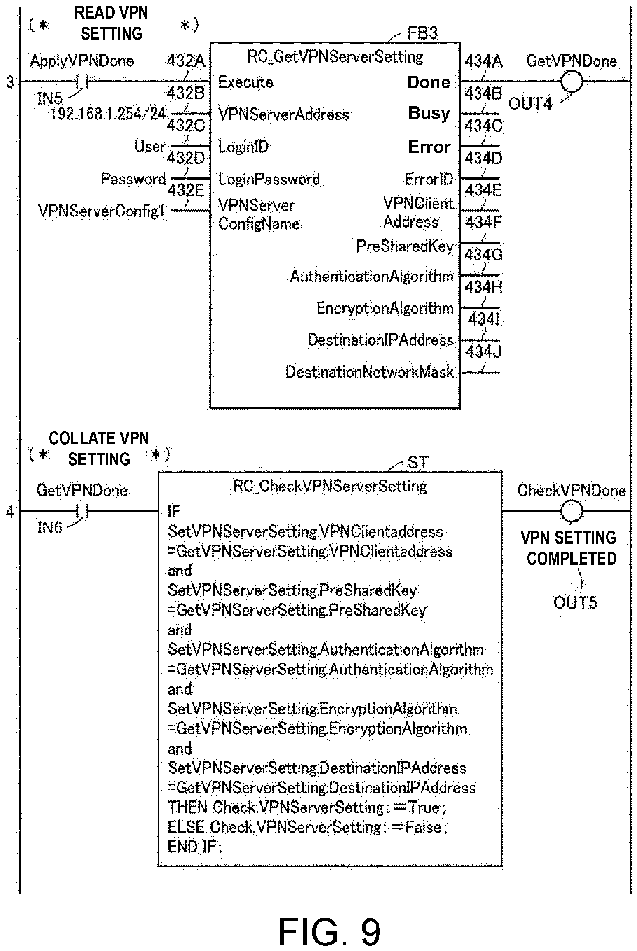

An example of using the function block will be described with reference to Figs. 8 and 9. Figs. 8 and 9 are diagrams illustrating an example of the user program 1066 incorporating the function block related to the communication setting.

The user program 1066 illustrated in Figs. 8 and 9 is defined by a ladder program. This user program 1066 is defined to perform a setting of a VPN so that maintenance can be performed from the remote site 4 when an abnormality occurs at the manufacturing site 2 and the controller 10 is set to a maintenance mode.

The user program 1066 is defined by input elements IN1 to IN6, function blocks FB1 to FB3, a structured text ST, and output elements OUT1 to OUT5.

The function block FB1 is referred to as "RC_SetVPNServerSetting". The function block FB1 indicates the instruction to write the VPN setting between the manufacturing site 2 and the remote site 4 to the repeater unit 200. The function block FB1 includes input units 412A to 412K that receive input of setting conditions to be written to the repeater unit 200, and output units 414A to 414D for outputting a result of a writing process.

The input units 412B to 412K indicate VPN setting conditions, and a VPN is defined according to the setting conditions input to input units 412B to 412K.

The input unit 412A indicated as "Execute" receives a setting for designating whether or not to execute the writing process. As an example, the input unit 412A receives an input of "True" (ON) or "False" (OFF). The writing process is not executed as long as "False" is input to the input unit 412A. In the example illustrated in Fig. 8, the writing process is executed when a value of an input element IN3 becomes "True" (ON).

The input unit 412B indicated as a "VPNServerAddress" receives an input for designating an IP address to be used as a VPN server. This IP address is one IP address or one of a plurality of IP addresses preset in the repeater unit 200. The CPU unit 100 specifies a target for communication settings according to the IP address input to the input unit 412B. In the example illustrated in Fig. 8, "192.168.1.254/24" is input to the input unit 412B, and the CPU unit 100 uses "192.168.1.254/24" in the IP addresses assigned to the repeater unit 200 as an address for the VPN server.

The input unit 412C indicated as "LoginID" receives an input of the user ID for performing the VPN setting. The input unit 412D indicated as "LoginPassword" receives an input of a password for performing the VPN setting. The user ID and password are information required at the time of remote access to the repeater unit 200.

The input unit 412E indicated as "VPNSeverConfigName" receives an input of a name of the VPN server which can be arbitrarily set.

The input unit 412F indicated as "VPNClient Address" receives an input for designating an IP address assigned to the repeater 4b that accesses the repeater unit 200 on a network outside a field network. In the example illustrated in Fig. 8, "20.0.0.1" is input to the input unit 412F, and the repeater unit 200 permits access from the repeater 4b to which the IP address of "20.0.0.1" is assigned.

The input unit 412G indicated as "PreSharedKey", receives an input for designating a pre-shared key for determining whether to allow remote access.

The input unit 412H indicated as "Authentication Algorithm" receives an input for designating an authentication algorithm that is used in the set VPN. As the authentication algorithm, for example, Message Digest Algorithm 5 (MD5), Secure Hash Algorithm (SHA)-1, and Hash-based Message Authentication Code (HMAC) are assumed.

The input unit 412I indicated as "Encryption Algorithm" receives an input for designating an encryption algorithm that is used in the set VPN. As the encryption algorithm, for example, Data Encryption Standard (DES), 3DES, and Advanced Encryption Standard (AES) are assumed.

The input unit 412J indicated as "DestinationIPAddress" receives an input for designating an IP address of a device that accesses the set VPN. In the example illustrated in Fig. 8, "192.168.2.0" is input to the input unit 412J, and the repeater unit 200 permits access to the device to which "192.168.2.0" is assigned.

The input unit 412K indicated as "DestinationNetworkMask" receives an input for designating a netmask of the IP address input to the input unit 412J.

When the writing process is normally executed, a signal indicating normal end is output from the output unit 414A indicated as "Done". During the execution of the writing process, a signal indicating that the writing process is in progress is output from an output unit 414B indicated as "Busy". When the VPN setting is not written normally, a signal indicating abnormal end is output from an output unit 414C indicated as "Error". In this case, an error ID for identifying content of the error is further output from an output unit 414D indicated as "Error ID".

The function block FB2 is referred to as "RC_ApplyVPNServerSetting". The function block FB2 indicates the instruction to enable the VPN setting written to the repeater unit 200. The function block FB2 includes input units 422A to 422E for receiving input for designating the VPN setting to be enabled, and output units 424A to 424D for outputting a result of performing the enabling process.

Information received by the input units 422B to 424E is information for specifying the VPN server to be enabled. Since detailed information received by each of the input units 422B to 424E is the same as the information received by the input units 412B to 414E, description thereof will be omitted. Further, since information output by the output units 424A to 424D is the same as the information output by the output units 414A to 414D, description thereof will be omitted.

The function block FB3 is referred to as "RC_GetVPNServerSetting". The function block FB3 indicates the instruction to read the VPN setting written to the repeater unit 200. The function block FB3 includes input units 432A to 432E for receiving an input for designating the VPN setting to be read, and output units 434A to 434J for outputting a result of the reading process.

Since information received by the input units 432A to 434E is the same as the information received by the input units 412A to 414E, description thereof will be omitted. Further, since information output by the output units 434A to 434D is the same as the information output by the output units 414A to 414D, description thereof will be omitted. The information output by the output units 414E to 414J is a result of the VPN settings input to and specified by the input units 432A to 434E. With the output of the information from all of the output units 414E to 414J, a signal indicating normal end is output from the output unit 414A indicated as "Done".

The structured text ST is referred to as "RC_CheckVPNServerSetting". The structured text ST indicates an instruction for determining whether or not written information on the VPN setting matches read information on the VPN setting. An instruction indicated by the structured text ST is set as a setting collation process. More specifically, in the structured text ST, when information input to the input units 412F to 412K of the function block FB1 matches information output from the output units 432E to 432J of the function block FB3, a value of a variable "CheckVPNDone" is set to "True" (ON), and when any one of pieces of the information does not match, the value of the variable "CheckVPNDone" is set to "False" (OFF).

Values of the input elements IN1 to IN6 change depending on assigned variables. More specifically, a variable "Status_Err" is assigned to the input element IN1. The variable "Status_Err" is a Boolean type, and an initial value thereof is "False" (= OFF). A value of the variable "Status_Err" changes to "True" (ON) on the basis of a state of the controller 10 becoming an error state. In other cases, the value of the variable "Status_Err" is "False" (OFF).

A variable "Mode_maintenance" is assigned to the input element IN2. The variable "Mode_maintenance" is a Boolean type, and an initial value thereof is "False" (= OFF). A value of the variable "Mode_maintenance" changes to "True" (ON) on the basis of the user operating the HMI 20 to change the controller 10 to a mode in which remote maintenance is executed. In other cases, the value of the variable "Mode_maintenance" is "False" (OFF). A trigger for changing to the mode in which remote maintenance is executed is not limited to the operation from the HMI 20, but may be an operation with respect to a switch (not illustrated) provided in the controller 10.

A variable "SetVPNFlag" is assigned to the input element IN3. The variable "SetVPNFlag" is a Boolean type, and an initial value thereof is "False" (= OFF). A value of the variable "SetVPNFlag" is associated with an output element OUT1. The value changes to "True" (ON) on the basis of "True" (ON) being output from the output element OUT1. In other cases, the value of the variable "SetVPNFlag" is "False" (OFF). The output element OUT1 outputs "True" (ON) when both the input element IN0 and the input element IN1 are "True" (ON), and outputs "False" (OFF) in other cases.

A variable "SetVPNDone" is assigned to the input element IN4. The variable "SetVPNDone" is a Boolean type, and an initial value thereof is "False" (= OFF). A value of the variable "SetVPNDone" is associated with the output element OUT2. The value changes to "True" (ON) on the basis of "True" (ON) being output from the output element OUT2. In other cases, the value of the variable "SetVPNDone" is "False" (OFF). The output element OUT2 changes from "False" (= OFF) to "True" (ON) when the signal indicating the normal end is output from the output unit 414A of the function block FB1.

A variable "ApplyVPNDone" is assigned to the input element IN5. The variable "ApplyVPNDone" is a Boolean type, and an initial value thereof is "False" (= OFF). A value of the variable "ApplyVPNDone" is associated with the output element OUT3. The value changes to "True" (ON) on the basis of "True" (ON) being output from the output element OUT3. In other cases, the value of the variable "ApplyVPNDone" is "False" (OFF). The output element OUT3 changes from "False" (= OFF) to "True" (ON) when the signal indicating the normal end is output from the output unit 424A of the function block FB2.

A variable "GetVPNDone" is assigned to the input element IN6. The variable "GetVPNDone" is a Boolean type, and an initial value thereof is "False" (= OFF). A value of the variable "GetVPNDone" is associated with the output element OUT4. The value changes to "True" (ON) on the basis of "True" (ON) being output from the output element OUT4. In other cases, the value of the variable "GetVPNDone" is "False" (OFF). The output element OUT4 changes from "False" (= OFF) to "True" (ON) when the signal indicating the normal end is output from the output unit 434A of the function block FB3.

The variable "CheckVPNDone" is assigned to the output element OUT5. The variable "CheckVPNDone" becomes "True" (ON) when the written information on the VPN setting all matches the read information on the VPN setting in the structured text ST, and becomes "False" (OFF) when at least one piece of information does not match or when a program of the structured text ST is not executed.

### (G2. Execution timing)

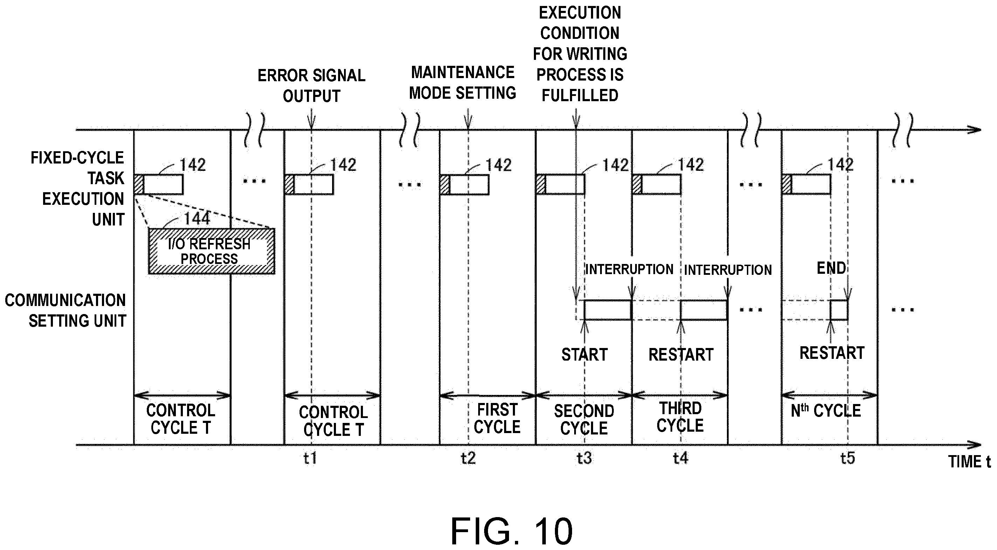

Fig. 10 is a diagram illustrating a timing at which the fixed-cycle task execution unit 140 and the communication setting unit 160 execute a process when the user program illustrated in Figs. 8 and 9 is executed.

The fixed-cycle task execution unit 140 repeatedly executes the user program 1066 according to a control cycle of the controller 10. A series of processes that are executed by the fixed-cycle task execution unit 140 are always executed in one cycle for each control cycle T. The series of processes (referred to as a preferential process 142) that are executed by the fixed-cycle task execution unit 140 include an I/O refresh process 144.

In the I/O refresh process 144, the value of the variable is updated.

The fixed-cycle task execution unit 140 executes the I/O refresh process 144 to update the value of the variable, and determines whether or not an execution condition for a process related to the communication settings is fulfilled in a subsequent process. When the execution condition for the process related to the communication settings is fulfilled, the communication setting unit 160 executes the process related to the communication settings for which the execution condition is fulfilled after the execution of the preferential process 142 is completed. The communication setting unit 160 interrupts a process that is being executed when the next cycle is started, and then restarts the interrupted process when the execution of the preferential process 142 is completed again.

In the example illustrated in Fig. 10, it is assumed that an error signal is output at a timing t1 and the maintenance mode is set at a timing t2. Assuming that the control cycle T at the timing t2 in which the maintenance mode is set is a first cycle, the variable "SetVPNFlag" changes from "False" (= OFF) to "True" (ON) in the I/O refresh process 144 executed in a second cycle. Accordingly, an execution condition for the writing process indicated by the function block FB1 of Fig. 8 is fulfilled.

The writing process is a process that is executed by the communication setting unit 160. The communication setting unit 160 starts the writing process from a timing t3 when the preferential process 142 of the second cycle is completed, and interrupts the writing process at a timing t4 when the third cycle starts. Thereafter, the interrupted writing process restarts from the timing t4 when the preferential process 142 of the third cycle is completed.

The communication setting unit 160 outputs a signal indicating that the process is being executed while the writing process is being executed, and outputs a signal indicating normal end when the process ends normally. In the example illustrated in Fig. 10, it is assumed that the writing process has ended at a timing t5.

When the writing process ends at the timing t5, the variable "SetVPNDone" changes from "False" (= OFF) to "True" (ON) in the I/O refresh process 144 that is executed in a (N+1)th cycle. Accordingly, an execution condition of the enabling process indicated by the function block FB2 in Fig. 8 is fulfilled.

Thus, a process of the user program 1066 illustrated in Figs. 8 and 9 proceeds in cooperation with the communication setting unit 160 and the fixed-cycle task execution unit 140. After the setting collation process indicated by the structured text ST is completed, the communication setting unit 160 does not perform the process until other execution conditions are fulfilled.

### (G3. Exchange of commands between CPU unit and repeater unit)

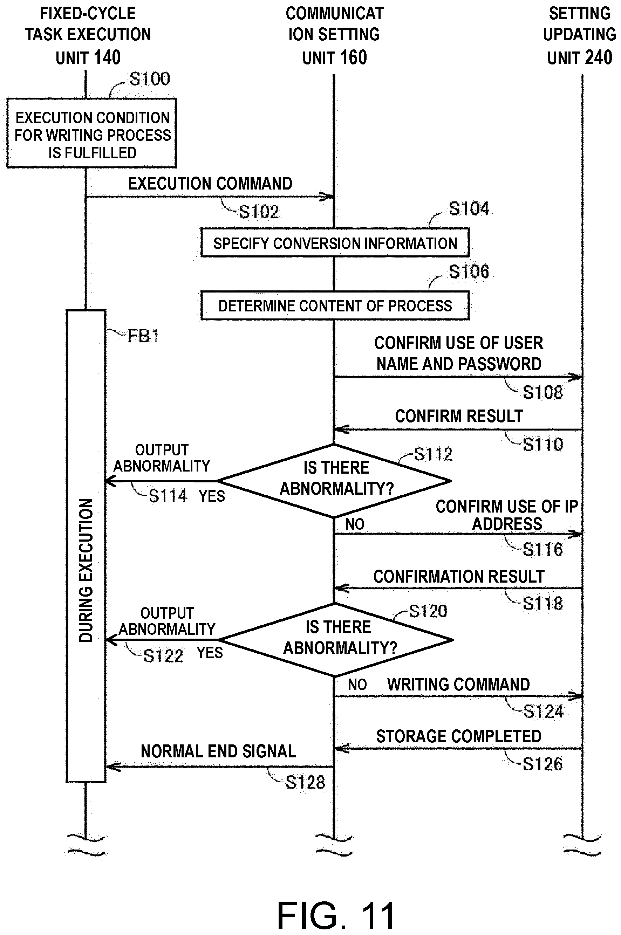

Specific command exchange that is performed between the communication setting unit 160 of the CPU unit 100 and the setting information updating unit 240 of the repeater unit 200 when the user program illustrated in Figs. 8 and 9 is executed will be described. Fig. 11 is a diagram illustrating exchange of commands between the communication setting unit 160 and the setting information updating unit 240. The writing process will be described as an example of communication settings process with reference to Fig. 11. In Fig. 11, description of interruption and restart of the process as illustrated in Fig. 10 is omitted. Further, a step is abbreviated as "S" below.

As described above, the communication setting unit 160 converts the instruction indicated by the function block 400 to a command that can be exchanged with the repeater unit 200 on the basis of the conversion information 582 specified by the conversion information specifying unit 180, performs exchange of the instruction with the repeater unit 200, and executes the instruction indicated by the function block 400.

More specifically, when the execution condition for the writing process is fulfilled (S100), the communication setting unit 160 receives a command to execute the writing process from the fixed-cycle task execution unit 140 (S102). The communication setting unit 160 specifies the conversion information 582 corresponding to the received command, that is, a type of function block 400 to be executed (S104). More specifically, the communication setting unit 160 instructs the conversion information specifying unit 180 to specify the conversion information 582 and receives a result of the specifying from the conversion information specifying unit 180 to specify the conversion information 582.

The communication setting unit 160 interprets the instruction indicated by the function block FB1 depending on the conversion information 582 specified in S104, and determines content of a process such as a type of command and a processing procedure (S106).

The communication setting unit 160 performs command exchange with the repeater unit 200 depending on items determined in S106. In the example illustrated in Fig. 11, processes S108 to S128 are executed. The processes of S108 to S128 are examples, and the processes may differ depending on a model of the repeater unit 200, and commands (language) that are used at the time of exchange may also differ.

The communication setting unit 160, for example, performs confirmation of whether or not a newly set user name and password can be used on the setting information updating unit 240 (S108).

The setting information updating unit 240 confirms whether or not the newly set user name and password can be used on the basis of the information stored in the setting information storage unit 220, and notifies the communication setting unit 160 of a result of the confirmation (S110).

The communication setting unit 160 determines whether or not there is an abnormality on the basis of the confirmation result notified from the setting information updating unit 240 (S112).

When there is an abnormality (YES in S 112), more specifically, when the newly set user name and password cannot be used, the communication setting unit 160 outputs a signal indicating abnormal end and the generated abnormality (S114). When there is no abnormality (NO in S 112), more specifically, when the newly set user name and password can be used, the communication setting unit 160 performs confirmation of whether or not a designated IP address can be used as the VPN server, on the setting information updating unit 240 (S116).

The setting information updating unit 240 confirms whether or not the designated IP address can be used as the VPN server on the basis of the information stored in the setting information storage unit 220 and information on a port assigned to the repeater unit 200, and notifies the communication setting unit 160 of a result of the confirmation (S118).

The communication setting unit 160 determines whether or not there is an abnormality on the basis of the confirmation result notified from the setting information updating unit 240 (S 120). When there is an abnormality (YES in S 120), more specifically, when a new IP address cannot be used, the communication setting unit 160 outputs a signal indicating abnormal end and the generated abnormality (S 122). When there is no abnormality (NO in S 120), more specifically, when the new IP address can be used, the communication setting unit 160 issues a command to write information related to the setting content to the setting information updating unit 240 (S124).

The setting information updating unit 240 stores the information related to the setting content in the setting information storage unit 220, and notifies the communication setting unit 160 of the completion of the storage (S126).

The communication setting unit 160 outputs a signal indicating that the processing has ended normally (S128). The fixed-cycle task execution unit 140 receives the fact that the process has normally ended and changes the output element OUT2 from "False" (= OFF) to "True" (ON).

Accordingly, the execution condition of the function block FB2 is fulfilled, and the next process is executed. In Fig. 11, a process after the function block FB2 is omitted.

Thus, the communication setting unit 160 defines, for example, a procedure of a process to be executed with the setting information updating unit 240 in order to issue one instruction (function block) selected by the user, and executes the process according to the defined procedure to perform the selected instruction.

### <H. Specific example of communication setting>

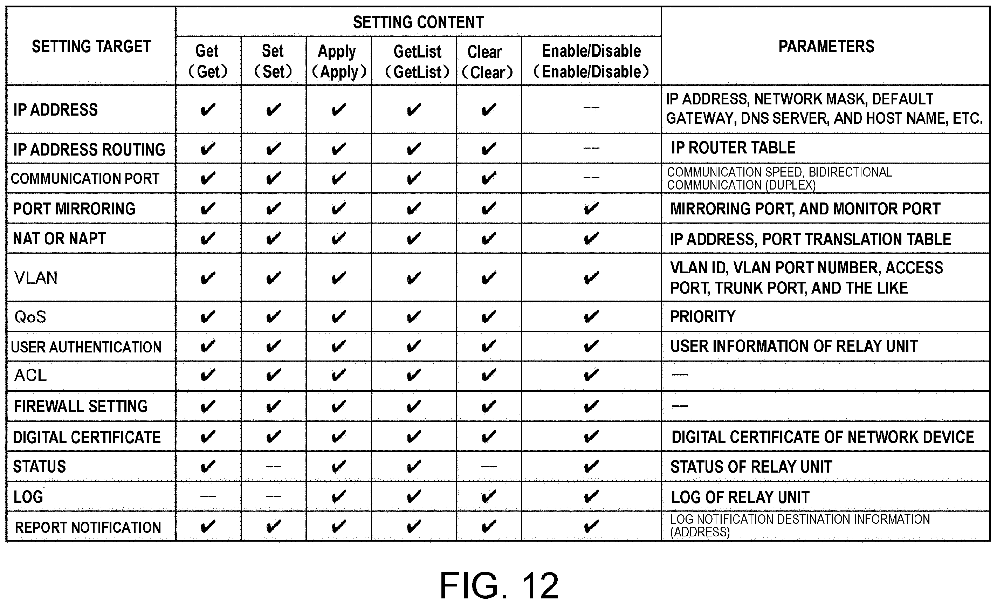

Fig. 12 is an example of instructions prepared in the support device 30. An instruction to write a VPN setting to the repeater unit 200, an instruction to enable the VPN setting written to the repeater unit 200, and an instruction to read the VPN setting written to the repeater unit 200 in embodiment 1 will be described by way of example. It is assumed that the instructions illustrated in Fig. 12 are instructions requiring data exchange with the repeater unit 200.

In Fig. 12, for each setting target, instructions assumed for the setting target are indicated by a "check mark". Further, for each setting target, parameters required for a setting of the setting target are shown in a setting parameter column.

Specifically, examples of items that can be set for the repeater unit 200 from the CPU unit 100 may include IP address, IP address routing (communication path), communication port, port mirroring, network address translation (NAT) or network address port translation (NAPT), virtual LAN (VLAN), quality of service (Qos), user authentication, access control list (ACL), firewall setting, digital certificates, status, logs, and report notifications.

In setting content, Get, Set, Apply, GetList, Clear, and Enable/Disable are set. Get means to acquire information on setting items. Set means to write the information on the setting items. Apply means to reflect the information on the setting items. GetList means to acquire a list of information on the setting items. For example, when GetList instruction is executed, the information on the setting items can be acquired from all devices connected to the relay device, or all pieces of information on the setting items can be acquired. Clear means to erase the information on the setting items or return the information to an initial value. Enable/Disable means to enable/disable the set items.

The parameters are information that is input or output when an instruction is executed. In a setting regarding the IP address, for example, an IP address, a network mask, a default gateway, a domain name system (DNS) server, and a host name are defined as parameters. Further, as instructions prepared for the IP address, for example, Get, Set, Apply, GetList, and Clear can be prepared.

In a setting regarding the IP address routing, for example, an IP router table is defined as a parameter. Further, as instructions provided for the IP address routing, for example, Get, Set, Apply, GetList, and Clear can be prepared.

In a setting regarding the communication port, a communication speed, a bidirectional communication (Duplex) scheme, and the like are defined as parameters. As instructions prepared for the communication port, for example, Get, Set, Apply, GetList, and Clear can be prepared.

In a setting regarding the port mirroring, for example, a mirroring port, and a monitor port are defined as parameters. As instructions prepared for the port mirroring, for example, Get, Set, Apply, GetList, Clear, and Enable/Disable can be prepared.

In a setting regarding the NAT or the NATP, for example, an IP address to be used, and a port translation table indicating a translation rule are defined as parameters. As instructions prepared for the NAT or NATP, for example, Get, Set, Apply, GetList, Clear, and Enable/Disable can be prepared.

In a setting regarding the VLAN, for example, a VLAN ID, a port number of the VLAN (VLAN Port Numer), and a port number set as an access port or a trunk port are defined as parameters. As the instructions prepared for the VLAN, for example, Get, Set, Apply, GetList, Clear, and Enable/Disable can be prepared.

In a setting regarding the QoS, for example, a priority when frames are transferred is defined as a parameter. As instructions prepared for the QoS, for example, Get, Set, Apply, GetList, Clear, and Enable/Disable can be prepared.

In a setting regarding the user authentication, for example, user information of the repeater unit 200 such as a user name or a password is defined as a parameter. As the instructions prepared for the user authentication, for example, Get, Set, Apply, GetList, Clear, and Enable/Disable can be prepared.

As instructions prepared for the ACL, for example, Get, Set, Apply, GetList, Clear, and Enable/Disable can be prepared.

As instructions prepared for the firewall setting, for example, Get, Set, Apply, GetList, Clear, and Enable/Disable can be prepared.

In a setting regarding the digital certificate, for example, a digital certificate of a network device is defined as a parameter. For example, the digital certificate is output. As instructions prepared for the digital certificate, for example, Get, Set, Apply, GetList, Clear, and Enable/Disable can be prepared.

In a setting regarding the status, for example, a status of the repeater unit 200 is defined as a parameter. For example, the status of the repeater unit 200 is output. As instructions prepared for the status, for example, Get, Apply, GetList, and Enable/Disable can be prepared.

In a setting regarding the log, for example, a log of the repeater unit 200 is defined as a parameter. For example, the log of the repeater unit 200 is output. As instructions prepared for the log, for example, Apply, GetList, Clear and Enable/Disable can be prepared.

In a setting regarding the report notification, for example, an address which is information on a notification destination of a log is defined as a parameter. As instruction prepared for the report notification, for example, Get, Set, Apply, GetList, Clear, and Enable/Disable can be prepared.

### <I. Modification example>

### (Modification example 1)

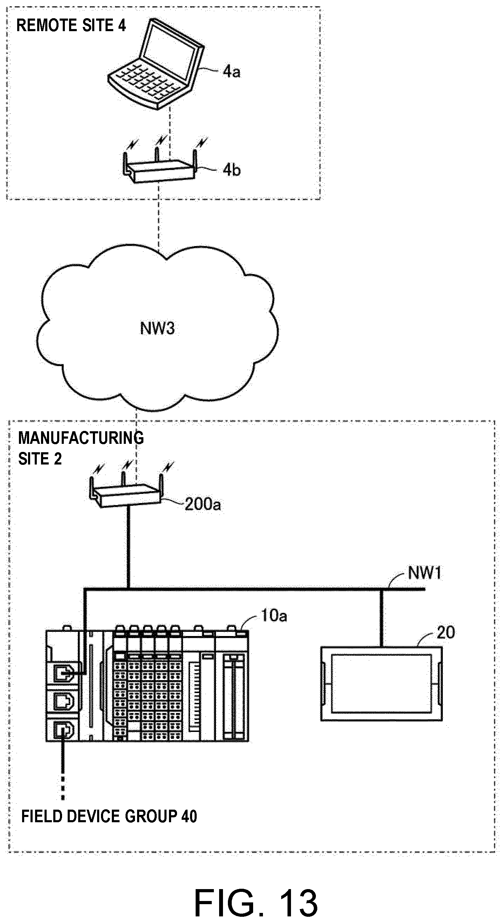

In embodiment 1, the communication system 1 includes the repeater unit 200 and the CPU unit 100. The configuration of the communication system 1 is not limited to the configuration illustrated in Fig. 1. Fig. 13 is a diagram illustrating a modification example of the communication system. In embodiment 1, the relay device is assumed to be a repeater unit 200 that constitutes one controller 10 together with the CPU unit 100 that is a control device. It is not necessary for the relay device to constitute the controller 10, and the relay device may be, for example, a relay device 200a such as a router, as illustrated in Fig. 13. A controller 10a in Fig. 13 has a configuration in which the repeater unit 200 is not included.

Further, a controller including a CPU that constitutes a function of the control device and a CPU that constitutes a function of the relay device may constitute the communication system. Further, a multi-core CPU including a processor core that constitutes the function of the control device and a processor core that constitutes the function of the relay device may be mounted in the controller to constitute the communication system.

### (Modification example 2)

In embodiment 1, the communication system 1 includes the HMI 20, but may not include the HMI. For example, although an execution condition for the communication settings is fulfilled on the basis of a signal output from the HMI 20, an input unit may be provided in the CPU unit 100 and the execution condition may be fulfilled on the basis of an operation received by the input unit. Further, the execution condition for the communication settings may be fulfilled on the basis of the state of the controller 10 or a signal output from the field network regardless of an operation of the user. When the communication settings is changed, there is concern that communication is interrupted which has a great influence on the manufacturing site 2 and, thus, the execution condition for the communication settings may be fulfilled according to the operation of the user.

### (Modification example 3)

In embodiment 1, the CPU unit 100 includes the conversion information 582 according to the model and the instruction of the repeater unit 200. Instructions may be prepared for each model of the repeater unit 200 without the conversion information 582. In this case, a user program including the instructions according to the repeater unit 200 connected to the CPU unit 100 may be installed in the CPU unit 100 from the support device 30, or the user program may be prepared for each model of the repeater unit 200, all the user programs may be installed in the CPU unit 100, and the user program may be executed depending on the type of connected repeater unit 200.

Further, the CPU unit 100 acquires the model of the repeater unit 200, the device information 260 of the repeater unit 200 and specifies the conversion information 582 on the basis of the device information 260, but the user may be caused to perform designation of the model of the repeater unit 200. For example, the HMI 20 may be caused to display a screen for requesting specifying of the model, and the conversion information 582 may be specified on the basis of an input to the HMI 20.

### [Embodiment 2]

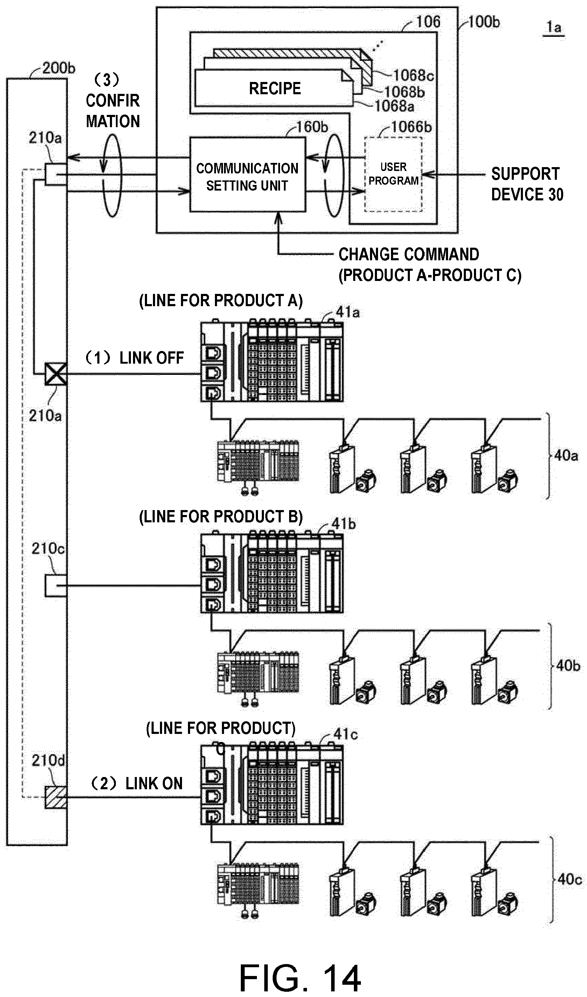

In embodiment 1, the relay device is a device that mediates communication between a network of the remote site 4 and the CPU unit 100. The relay device may be a switch that mediates each controller in the manufacturing site 2 and a controller that generally manages those controllers. Fig. 14 is a diagram illustrating a schematic configuration of a control device of embodiment 2.

A communication system 1a includes a relay device 200b that is an Ethernet switch, a host controller 100b that manages one or a plurality of lines of the manufacturing site 2, and devices 41a to 41c that are controllers that manage one manufacturing line that is connected to the host controller 100b via the relay device 200b. The host controller 100b is an example of the control device of the present invention. The devices 41a to 41c are examples of devices connected to the control device via the relay device. The relay device 200b is an example of the relay device of the present invention.

The relay device 200b includes a plurality of ports 210a to 210d. The number of ports included in the relay device 200b is not limited to four, and may be equal to or smaller than three or may be equal to or greater than five.

The host controller 100b is connected to the port 210a. A device 41a which is a controller that manages a line for product A is connected to the port 210b. A field device group 40a necessary for manufacture of product A is connected to the device 41a. A device 41b which is a controller for managing a line for product B is connected to the port 210c. A field device group 40b necessary for manufacture of product B is connected to the device 41b. A device 41c which is a controller for managing a line for product C is connected to a port 210d. A field device group 40c necessary for manufacture of product C is connected to the device 41c.

The host controller 100b (1) disconnects communication with one or a plurality of selected devices (link off), (2) connects communication with the one or a plurality of selected devices (link on), and (3) stores a user program 1066a having a configuration in which three instructions to confirm a connected communication are combined in the storage 106. Further, the storage 106 stores recipes 1068a to 1068c including a condition for operating the field device group for each of the field device groups 40a to 40c. The recipe is data including conditions such as a production procedure, a production variety, and parameters suitable for production. That is, the recipe 1068a includes a condition for operating the field device group 40a, and the condition includes a condition of a production procedure for manufacturing product A, a production variety, parameters suitable for production, or the like.

A user program 1066b is created by using, for example, the support device 30, and is installed in the host controller 100b from the support device 30. Further, the recipes 1068a to 1068c may be installed from the support device 30 or may be installed in the host controller 100b in a state of being stored in a storage medium such as a memory card.

The host controller 100b includes a communication setting unit 160b as in embodiment 1. The communication setting unit 160b performs exchange of a command with the relay device 200b when executing each instruction included in the user program 1066b.

The user program 1066b is programmed to be executed in order of instruction of (1) → update of recipe → instruction of (2) → instruction of (3). Here, the recipe is data including conditions such as a production procedure, a production variety, and parameters suitable for production.

That is, when an execution condition for the user program 1066b is fulfilled, the host controller 100b exchanges data with the relay device 200b to disconnect the communication with the port 210b, and then switches the recipe from a recipe for product A to a recipe for product C. After switching the recipe, the host controller 100b exchanges data with the relay device 200b to newly establish communication with the port 210d. The host controller 100b performs a test of whether or not communication with device C has been established, and regards the process as having been normally completed when the establishment of the communication is confirmed.

Thus, it is possible to easily perform the setup change by using the relay device 200b having a communication switching function and connecting the device to each port in advance. Further, connecting the device to the relay device 200b in advance makes it unnecessary to set or eliminate lines connecting devices at the time of setup change, and it is possible to prevent the connection lines from deteriorating and to prevent a wrong connection from occurring.

It should be considered that the embodiments disclosed this time are exemplary in all respects and not restrictive. The scope of the present invention is indicated by the appended claims.

### [Reference Signs List]

1, 1a Communication system
2 Manufacturing site
4 Remote site
4a Computer
4b Repeater
10, 10a Controller
30, 30A Support device
31, 102 Processor
32, 104 Main memory
33 Input unit
34 Output unit
35, 106 Storage
36 Optical drive
36a Recording medium
38,120 Processor bus
40, 40a, 40b, 40c Field device group
41A, 41B, 41C, 41 Device
41a, 41b, 41c, C Device

## Claims

1. A control device (100, 100A, 100a, 100b) capable of communication with other devices (4a, 41A, 41B, 41C, 41a, 41b, 41c) via a relay device (200, 200A, 200a, 200b), the control device (100, 100A, 100a, 100b) comprising:
a storage unit (106, 106A) configured to store a user program (1066, 1066A, 1066a) including at least one instruction (FB1, FB2, FB3) for performing communication settings regarding communication via the relay device (200, 200A, 200a, 200b); and
a communication setting unit (160, 160A, 160b) configured to perform transmission or reception of a command to or from the relay device (200, 200A, 200a, 200b) based on fulfillment of an execution condition for the instruction and perform the communication settings indicated by the instruction,
wherein the control device (100, 100A, 100a, 100b) is **characterized in that**
the user program (1066, 1066A, 1066a) includes an instruction related to the communication settings and a preferential instruction having a higher priority than the instruction,
the control device (100, 100A, 100a, 100b) further comprises a fixed-cycle task execution unit (140) configured to repeatedly execute the preferential instruction at a fixed cycle, and
the communication setting unit (160, 160A, 160b) issues the instruction related to the communication settings so as not to interfere with execution of the preferential instruction,
wherein a protocol for the transmission or the reception of the command to or from the relay device (200, 200A, 200a, 200b) differs depending on a type of the relay device (200, 200A, 200a, 200b), and
the communication setting unit (160, 160A, 160b) is configured to:
perform the transmission or the reception of the command to or from the relay device (200, 200A, 200a, 200b) according to the protocol corresponding to the type of the relay device (200, 200A, 200a, 200b),
wherein the storage unit (106, 106A) stores conversion information (582) including the protocol for each type of the relay device (200, 200A, 200a, 200b), and
the control device (100, 100A, 100a, 100b) further comprises:
a conversion information specifying unit (180), configured to:
determine the type of the relay device (200, 200A, 200a, 200b) based on device information (260) included in the relay device (200, 200A, 200a, 200b), wherein the device information (260) comprises a media access control address; and
specify the conversion information (582) based on the type of the relay device (200, 200A, 200a, 200b), and
the communication setting unit (160, 160A, 160b) is configured to:
perform the transmission or the reception of the command to or from the relay device (200, 200A, 200a, 200b) based on the conversion information (582) specified by the conversion information specifying unit (180),
wherein the conversion information (582) is stored in the storage unit (106, 106A) for each piece of content of the instruction, and
the conversion information specifying unit (180) is further configured to:
specify the conversion information (582) based on an instruction for which an execution condition is fulfilled and the type of the relay device (200, 200A, 200a, 200b), and
the communication setting unit (160, 160A, 160b) is further configured to:
interpret the command into an instruction interpretable by the relay device (200, 200A, 200a, 200b) based on the conversion information (582).

2. The control device (100, 100A, 100a, 100b) according to claim 1,
wherein the control device (100, 100A, 100a, 100b) is communicatively connected to a first apparatus (41a) configured to manage a first field device group and a second apparatus (41c) configured to manage a second field device group via the relay device (200, 200A, 200a, 200b),
the storage unit (106, 106A) stores a first recipe (1068a) including a condition for moving the first field device group and a second recipe (1068c) including a condition for moving the second field device group, and
the user program (1066, 1066A, 1066a) includes an instruction for switching of a device serving as a connection destination and an instruction to switch the recipe according to the switching.

3. A support device for supporting development of a user program (1066, 1066A, 1066a) for a control device (100, 100A, 100a, 100b) capable of communication with other devices (4a, 41A, 41B, 41C, 41a, 41b, 41c) via a relay device (200, 200A, 200a, 200b), the support device comprising:
a storage unit (106, 106A) configured to store at least one instruction for performing communication settings regarding communication via the relay device (200, 200A, 200a, 200b); and
a control unit (31) configured to combine the at least one instruction stored in the storage unit (106, 106A) and generate the user program (1066, 1066A, 1066a),
wherein the control unit (31) creates the user program (1066, 1066A, 1066a) in a format enabling the control device (100, 100A, 100a, 100b) to perform transmission or reception a command to or from the relay device (200, 200A, 200a, 200b) at a time of execution of the instruction,
wherein the support device is **characterized in that**
the user program (1066, 1066A, 1066a) includes an instruction related to the communication settings and a preferential instruction having a higher priority than the instruction,
the control device (100, 100A, 100a, 100b) further comprises a fixed-cycle task execution unit (140) configured to repeatedly execute the preferential instruction at a fixed cycle, and
a communication setting unit (160, 160A, 160b) issues the instruction related to the communication settings so as not to interfere with execution of the preferential instruction,
wherein a protocol for the transmission or the reception of the command to or from the relay device (200, 200A, 200a, 200b) differs depending on a type of the relay device (200, 200A, 200a, 200b), and
the communication setting unit (160, 160A, 160b) is configured to:
perform the transmission or the reception of the command to or from the relay device (200, 200A, 200a, 200b) according to the protocol corresponding to the type of the relay device (200, 200A, 200a, 200b),
wherein the storage unit (106, 106A) stores conversion information (582) including the protocol for each type of the relay device (200, 200A, 200a, 200b), and
the control device (100, 100A, 100a, 100b) further comprises:
a conversion information specifying unit (180), configured to:
determine the type of the relay device (200, 200A, 200a, 200b) based on device information (260) included in the relay device (200, 200A, 200a, 200b), wherein the device information (260) comprises a media access control address; and
specify the conversion information (582) based on the type of the relay device (200, 200A, 200a, 200b), and
the communication setting unit (160, 160A, 160b) is configured to:
perform the transmission or the reception of the command to or from the relay device (200, 200A, 200a, 200b) based on the conversion information (582) specified by the conversion information specifying unit (180),
wherein the conversion information (582) is stored in the storage unit (106, 106A) for each piece of content of the instruction, and
the conversion information specifying unit (180) is further configured to:
specify the conversion information (582) based on an instruction for which an execution condition is fulfilled and the type of the relay device (200, 200A, 200a, 200b), and
the communication setting unit (160, 160A, 160b) is further configured to:
interpret the command into an instruction interpretable by the relay device (200, 200A, 200a, 200b) based on the conversion information (582).

4. A communication system comprising:
a relay device (200, 200A, 200a, 200b); and
a control device (100, 100A, 100a, 100b) capable of communicating with other devices (4a, 41A, 41B, 41C, 41a, 41b, 41c) via the relay device (200, 200A, 200a, 200b),
wherein the control device (100, 100A, 100a, 100b) includes
a storage unit (106, 106A) configured to store a user program (1066, 1066A, 1066a) including at least one instruction for performing communication settings regarding communication via the relay device (200, 200A, 200a, 200b); and
a communication setting unit (160, 160A, 160b) configured to perform transmission or reception of a command to or from the relay device (200, 200A, 200a, 200b) based on fulfillment of an execution condition for the instruction and perform the communication settings indicated by the instruction,
wherein the communication system is **characterized in that**
the user program (1066, 1066A, 1066a) includes an instruction related to the communication settings and a preferential instruction having a higher priority than the instruction,
the control device (100, 100A, 100a, 100b) further comprises a fixed-cycle task execution unit (140) configured to repeatedly execute the preferential instruction at a fixed cycle, and
the communication setting unit (160, 160A, 160b) issues the instruction related to the communication settings so as not to interfere with execution of the preferential instruction,
wherein a protocol for the transmission or the reception of the command to or from the relay device (200, 200A, 200a, 200b) differs depending on a type of the relay device (200, 200A, 200a, 200b), and
the communication setting unit (160, 160A, 160b) is configured to:
perform the transmission or the reception of the command to or from the relay device (200, 200A, 200a, 200b) according to the protocol corresponding to the type of the relay device (200, 200A, 200a, 200b),
wherein the storage unit (106, 106A) stores conversion information (582) including the protocol for each type of the relay device (200, 200A, 200a, 200b), and
the control device (100, 100A, 100a, 100b) further comprises:
a conversion information specifying unit (180), configured to:
determine the type of the relay device (200, 200A, 200a, 200b) based on device information (260) included in the relay device (200, 200A, 200a, 200b), wherein the device information (260) comprises a media access control address; and
specify the conversion information (582) based on the type of the relay device (200, 200A, 200a, 200b), and
the communication setting unit (160, 160A, 160b) is configured to:
perform the transmission or the reception of the command to or from the relay device (200, 200A, 200a, 200b) based on the conversion information (582) specified by the conversion information specifying unit (180),
wherein the conversion information (582) is stored in the storage unit (106, 106A) for each piece of content of the instruction, and
the conversion information specifying unit (180) is further configured to:
specify the conversion information (582) based on an instruction for which an execution condition is fulfilled and the type of the relay device (200, 200A, 200a, 200b), and
the communication setting unit (160, 160A, 160b) is further configured to:
interpret the command into an instruction interpretable by the relay device (200, 200A, 200a, 200b) based on the conversion information (582).

## Patentansprüche

1. Steuervorrichtung (100, 100A, 100a, 100b) die über eine Relaisvorrichtung (200, 200A, 200a, 200b) mit anderen Vorrichtungen (4a, 41A, 41B, 41C, 41a, 41b, 41c) kommunizieren kann, wobei die Steuervorrichtung (100, 100A, 100a, 100b) umfasst:
eine Speichereinheit (106, 106A), die konfiguriert ist, um ein Benutzerprogramm (1066, 1066A, 1066a) zu speichern, das wenigstens einen Befehl (FB1, FB2, FB3) zum Ausführen von Kommunikationseinstellungen bezüglich der Kommunikation über die Relaisvorrichtung (200, 200A, 200a, 200b) enthält; und
eine Kommunikationseinstellungseinheit (160, 160A, 160b), die konfiguriert ist, um Übertragung oder Empfang eines Befehls an die oder von der Relaisvorrichtung (200, 200A, 200a, 200b) basierend auf Erfüllung einer Ausführungsbedingung für den Befehl durchzuführen und die Kommunikationseinstellungen, angegeben durch den Befehl, durchzuführen,
wobei die Steuervorrichtung (100, 100A, 100a, 100b) **dadurch gekennzeichnet ist, dass** das Benutzerprogramm (1066, 1066A, 1066a) einen Befehl in Bezug auf die Kommunikationseinstellungen und einen bevorzugten Befehl mit einer höheren Priorität als der Befehl enthält,
die Steuervorrichtung (100, 100A, 100a, 100b) ferner eine Festzyklus-Aufgabenausführeinheit (140) umfasst, die so konfiguriert ist, dass sie den bevorzugten Befehl in einem festen Zyklus wiederholt ausführt, und die Kommunikationseinstellungseinheit (160, 160A, 160b) den Befehl, der sich auf die Kommunikationseinstellungen bezieht, so ausgibt, dass er die Ausführung des bevorzugten Befehls nicht stört,
wobei ein Protokoll für die Übertragung oder den Empfang des Befehls an die oder von der Relaisvorrichtung (200, 200A, 200a, 200b) je nach Typ der Relaisvorrichtung (200, 200A, 200a, 200b) unterschiedlich ist, und
die Kommunikationseinstellungseinheit (160, 160A, 160b) so konfiguriert ist, dass sie die Übertragung oder den Empfang des Befehls an oder von der Relaisvorrichtung (200, 200A, 200a, 200b) gemäß dem Protokoll durchführt, das dem Typ der Relaisvorrichtung (200, 200A, 200a, 200b) entspricht,
wobei die Speichereinheit (106, 106A) Umwandlungsinformationen (582) speichert, die das Protokoll für jeden Typ der Relaisvorrichtung (200, 200A, 200a, 200b) enthalten, und die Steuervorrichtung (100, 100A, 100a, 100b) ferner umfasst:
eine Umwandlungsinformations-Spezifizierungseinheit (180), die konfiguriert ist, um:
den Typ der Relaisvorrichtung (200, 200A, 200a, 200b) basierend auf den Vorrichtungsinformationen (260), die in der Relaisvorrichtung (200, 200A, 200a, 200b) enthalten sind, zu bestimmen, wobei die Vorrichtungsinformationen (260) eine Media-Access-Control-Adresse umfassen; und
die Umwandlungsinformationen (582) basierend auf dem Typ der Relaisvorrichtung (200, 200A, 200a, 200b) zu spezifizieren, und
die Kommunikationseinstellungseinheit (160, 160A, 160b) ferner konfiguriert ist, um:
die Übertragung oder den Empfang des Befehls an die oder von der Relaisvorrichtung (200, 200A, 200a, 200b) basierend auf den Umwandlungsinformationen (582) durchzuführen, spezifiziert von der Umwandlungsinformations-Spezifizierungseinheit (180), wobei die Umwandlungsinformationen (582) für jeden Teil von Inhalt des Befehls in der Speichereinheit (106, 106A) gespeichert sind, und
die Umwandlungsinformations-Spezifizierungseinheit (180) ferner konfiguriert ist, um:
die Umwandlungsinformationen (582) basierend auf einem Befehl, für den eine Ausführungsbedingung erfüllt ist, und des Typs der Relaisvorrichtung (200, 200A, 200a, 200b) zu spezifizieren, und
die Kommunikationseinstellungseinheit (160, 160A, 160b) ferner konfiguriert ist, um
den Befehl basierend auf den Umwandlungsinformationen (582) in einen von der Relaisvorrichtung (200, 200A, 200a, 200b) interpretierbaren Befehl zu interpretieren.

2. Steuervorrichtung (100, 100A, 100a, 100b) gemäß Anspruch 1,
wobei die Steuervorrichtung (100, 100A, 100a, 100b) über die Relaisvorrichtung (200, 200A, 200a, 200b) mit einen ersten Gerät (41a), das zum Verwalten einer ersten Feldvorrichtungsgruppe konfiguriert ist, und einem zweiten Gerät (41c), das zum Verwalten einer zweiten Feldvorrichtungsgruppe konfiguriert ist, in Kommunikationsverbindung steht,
die Speichereinheit (106, 106A) ein erstes Rezept (1068a), das eine Bedingung zum Bewegen der ersten Feldvorrichtungsgruppe enthält, und ein zweites Rezept (1068c) speichert, das eine Bedingung zum Bewegen der zweiten Feldvorrichtungsgruppe enthält, und
das Benutzerprogramm (1066, 1066A, 1066a) einen Befehl zum Umschalten einer als Verbindungsziel dienenden Vorrichtung und einen Befehl zum Umschalten des Rezepts entsprechend der Umschaltung enthält.

3. Unterstützungsvorrichtung zum Unterstützen der Entwicklung eines Benutzerprogramms (1066, 1066A, 1066a) für eine Steuervorrichtung (100, 100A, 100a, 100b), die mit anderen Vorrichtungen (4a, 41A, 41B, 41C, 41a, 41b, 41c) über eine Relaisvorrichtung (200, 200A, 200a, 200b) kommunizieren kann,
wobei die Steuervorrichtung (100, 100A, 100a, 100b) umfasst:
eine Speichereinheit (106, 106A), die so konfiguriert ist, dass sie mindestens einen Befehl zum Ausführen von Kommunikationseinstellungen bezüglich der Kommunikation über die Relaisvorrichtung (200, 200A, 200a, 200b) speichert; und
eine Steuereinheit (31), die so konfiguriert ist, dass sie den mindestens einen in der Speichereinheit (106, 106A) gespeicherten Befehl kombiniert und das Benutzerprogramm (1066, 1066A, 1066a) erzeugt,
wobei die Steuereinheit (31) das Benutzerprogramm (1066, 1066A, 1066a) in einem Format erstellt, das es der Steuervorrichtung (100, 100A, 100a, 100b) ermöglicht, zu einem Zeitpunkt der Ausführung des Befehls eine Übertragung oder einen Empfang eines Befehls an die oder von der Relaisvorrichtung (200, 200A, 200a, 200b) durchzuführen,
wobei die Unterstützungsvorrichtung **dadurch gekennzeichnet ist, dass**
das Benutzerprogramm (1066, 1066A, 1066a) ein Befehl bezüglich der Kommunikationseinstellungen und ein bevorzugter Befehl mit einer höheren Priorität als die Befehl enthält,
die Steuervorrichtung (100, 100A, 100a, 100b) ferner eine Festzyklus-Aufgabenausführeinheit (140) umfasst, die so konfiguriert ist, dass sie den bevorzugten Befehl in einem festen Zyklus wiederholt ausführt, und
eine Kommunikationseinstellungseinheit (160, 160A, 160b) den Befehl in Bezug auf die Kommunikationseinstellungen so ausgibt, dass die Ausführung des bevorzugten Befehls nicht beeinträchtigt wird,
wobei ein Protokoll für die Übertragung oder den Empfang des Befehls an die oder von der Relaisvorrichtung (200, 200A, 200a, 200b) je nach Typ der Relaisvorrichtung (200, 200A, 200a, 200b) unterschiedlich ist, und
die Kommunikationseinstellungseinheit (160, 160A, 160b) konfiguriert ist, um:
die Übertragung oder den Empfang des Befehls an oder von der Relaisvorrichtung (200, 200A, 200a, 200b) gemäß dem Protokoll durchzuführen, das dem Typ der Relaisvorrichtung (200, 200A, 200a, 200b) entspricht,
wobei die Speichereinheit (106, 106A) Umwandlungsinformationen (582) speichert, die das Protokoll für jeden Typ der Relaisvorrichtung (200, 200A, 200a, 200b) enthalten, und die Steuervorrichtung (100, 100A, 100a, 100b) ferner umfasst:
eine Umwandlungsinformations-Spezifizierungseinheit (180), die konfiguriert ist, um:
den Typ der Relaisvorrichtung (200, 200A, 200a, 200b) basierend auf den Vorrichtungsinformationen (260) zu bestimmen, die in der Relaisvorrichtung (200, 200A, 200a, 200b) enthalten sind, wobei die Vorrichtungsinformationen (260) eine Media-Access-Control-Adresse umfassen; und
die Umwandlungsinformationen (582) basierend auf dem Typ der Relaisvorrichtung (200, 200A, 200a, 200b) zu spezifizieren, und
die Kommunikationseinstellungseinheit (160, 160A, 160b) konfiguriert ist, um:
die Übertragung oder den Empfang des Befehls an die oder von der Relaisvorrichtung (200, 200A, 200a, 200b) basierend auf den Umwandlungsinformationen (582) durchzuführen, spezifiziert von der Umwandlungsinformations-Spezifizierungseinheit (180),
wobei die Umwandlungsinformationen (582) für jeden Teil von Inhalt des Befehls in der Speichereinheit (106, 106A) gespeichert sind, und
die Umwandlungsinformations-Spezifizierungseinheit (180) ferner konfiguriert ist, um:
die Umwandlungsinformationen (582) basierend auf einem Befehl, für den eine Ausführungsbedingung erfüllt ist, und des Typs der Relaisvorrichtung (200, 200A, 200a, 200b) zu spezifizieren, und
die Kommunikationseinstellungseinheit (160, 160A, 160b) ferner konfiguriert ist, um:
den Befehl basierend auf den Umwandlungsinformationen (582) in einen von der Relaisvorrichtung (200, 200A, 200a, 200b) interpretierbaren Befehl zu interpretieren.

4. Kommunikationssystem, das umfasst:
eine Relaisvorrichtung (200, 200A, 200a, 200b); und
eine Steuervorrichtung (100, 100A, 100a, 100b), die über die Relaisvorrichtung (200, 200A, 200a, 200b) mit anderen Vorrichtungen (4a, 41A, 41B, 41C, 41a, 41b, 41c) kommunizieren kann,
wobei die Steuervorrichtung (100, 100A, 100a, 100b) enthält eine Speichereinheit (106, 106A), die konfiguriert ist, um ein Benutzerprogramm (1066, 1066A, 1066a) zu speichern, das mindestens einen Befehl zum Ausführen von Kommunikationseinstellungen bezüglich der Kommunikation über die Relaisvorrichtung (200, 200A, 200a, 200b) enthält; und
eine Kommunikationseinstellungseinheit (160, 160A, 160b), die konfiguriert ist, um die Übertragung oder den Empfang eines Befehls an die oder von der Relaisvorrichtung (200, 200A, 200a, 200b) basierend auf der Erfüllung einer Ausführungsbedingung für den Befehl durchzuführen und die durch den Befehl angegebenen Kommunikationseinstellungen durchzuführen,
wobei das Kommunikationssystem **dadurch gekennzeichnet ist, dass**
das Benutzerprogramm (1066, 1066A, 1066a) einen Befehl in Bezug auf die Kommunikationseinstellungen und einen bevorzugten Befehl mit einer höheren Priorität als der Befehl enthält,
die Steuervorrichtung (100, 100A, 100a, 100b) ferner eine Festzyklus-Aufgabenausführeinheit (140) umfasst, die so konfiguriert ist, dass sie den bevorzugten Befehl in einem festen Zyklus wiederholt ausführt, und
die Kommunikationseinstellungseinheit (160, 160A, 160b) den Befehl, der sich auf die Kommunikationseinstellungen bezieht, so ausgibt, dass er die Ausführung des bevorzugten Befehls nicht stört,
wobei ein Protokoll für die Übertragung oder den Empfang des Befehls an die oder von der Relaisvorrichtung (200, 200A, 200a, 200b) je nach Typ der Relaisvorrichtung (200, 200A, 200a, 200b) unterschiedlich ist, und
die Kommunikationseinstellungseinheit (160, 160A, 160b) konfiguriert ist, um:
die Übertragung oder den Empfang des Befehls an oder von der Relaisvorrichtung (200, 200A, 200a, 200b) gemäß dem Protokoll durchzuführen, das dem Typ der Relaisvorrichtung (200, 200A, 200a, 200b) entspricht,
wobei die Speichereinheit (106, 106A) Umwandlungsinformationen (582) speichert, die das Protokoll für jeden Typ der Relaisvorrichtung (200, 200A, 200a, 200b) enthalten, und
die Steuervorrichtung (100, 100A, 100a, 100b) ferner umfasst:
eine Umwandlungsinformations-Spezifizierungseinheit (180), die konfiguriert ist, um:
den Typ der Relaisvorrichtung (200, 200A, 200a, 200b) basierend auf den Vorrichtungsinformationen (260) zu bestimmen, die in der Relaisvorrichtung (200, 200A, 200a, 200b) enthalten sind, wobei die Vorrichtungsinformationen (260) eine Media-Access-Control-Adresse umfassen; und
die Umwandlungsinformationen (582) basierend auf dem Typ der Relaisvorrichtung (200, 200A, 200a, 200b) zu spezifizieren, und
die Kommunikationseinstellungseinheit (160, 160A, 160b) konfiguriert ist, um:
die Übertragung oder den Empfang des Befehls an die oder von der Relaisvorrichtung (200, 200A, 200a, 200b) basierend auf den Umwandlungsinformationen (582) durchzuführen, spezifiziert von der Umwandlungsinformations-Spezifizierungseinheit (180),
wobei die Umwandlungsinformationen (582) für jeden Teil von Inhalt des Befehls in der Speichereinheit (106, 106A) gespeichert sind, und
die Umwandlungsinformations-Spezifizierungseinheit (180) ferner konfiguriert ist, um:
die Umwandlungsinformationen (582) basierend auf einem Befehl, für den eine Ausfiihrungsbedingung erfüllt ist, und des Typs der Relaisvorrichtung (200, 200A, 200a, 200b) zu spezifizieren, und
die Kommunikationseinstellungseinheit (160, 160A, 160b) ferner konfiguriert ist, um:
den Befehl basierend auf den Umwandlungsinformationen (582) in einen von der Relaisvorrichtung (200, 200A, 200a, 200b) interpretierbaren Befehl zu interpretieren.

## Revendications

1. Dispositif de commande (100, 100A, 100a, 100b) capable de communiquer avec d'autres dispositifs (4a, 41A, 41B, 41C, 41a, 41b, 41c) via un dispositif de relais (200, 200A, 200a, 200b), le dispositif de commande (100, 100A, 100a, 100b) comprenant :
une unité de stockage (106, 106A) configurée pour stocker un programme utilisateur (1066, 1066A, 1066a) comportant au moins une instruction (FB1, FB2, FB3) pour réaliser des réglages de communication en ce qui concerne une communication via le dispositif de relais (200, 200A, 200a, 200b) ; et
une unité de réglage de communication (160, 160A, 160b) configurée pour réaliser une transmission ou une réception d'une commande à destination ou en provenance du dispositif de relais (200, 200A, 200a, 200b) sur la base de l'accomplissement d'une condition d'exécution pour l'instruction et pour réaliser les réglages de communication indiqués par l'instruction,
dans lequel le dispositif de commande (100, 100A, 100a, 100b) est **caractérisé en ce que**
le programme utilisateur (1066, 1066A, 1066a) comporte une instruction liée aux réglages de communication et une instruction préférentielle présentant une priorité supérieure à l'instruction,
le dispositif de commande (100, 100A, 100a, 100b) comprend en outre une unité d'exécution de tâche à cycle fixe (140) configurée pour exécuter à répétition l'instruction préférentielle à un cycle fixe, et
l'unité de réglage de communication (160, 160A, 160b) émet l'instruction liée aux réglages de communication de manière à ne pas gêner l'exécution de l'instruction préférentielle,
dans lequel un protocole pour la transmission ou la réception de la commande à destination ou en provenance du dispositif de relais (200, 200A, 200a, 200b) diffère selon un type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) selon le protocole correspondant au type du dispositif de relais (200, 200A, 200a, 200b),
dans lequel l'unité de stockage (106, 106A) stocke des informations de conversion (582) comportant le protocole pour chaque type du dispositif de relais (200, 200A, 200a, 200b), et
le dispositif de commande (100, 100A, 100a, 100b) comprend en outre :
une unité de spécification d'informations de conversion (180) configurée pour :
déterminer le type du dispositif de relais (200, 200A, 200a, 200b) sur la base d'informations de dispositif (260) incluses dans le dispositif de relais (200, 200A, 200a, 200b), dans lequel les informations de dispositif (260) comprennent une adresse de commande d'accès au support ; et
spécifier les informations de conversion (582) sur la base du type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) sur la base des informations de conversion (582) spécifiées par l'unité de spécification d'informations de conversion (180),
dans lequel les informations de conversion (582) sont stockées dans l'unité de stockage (106, 106A) pour chaque élément de contenu de l'instruction, et
l'unité de spécification d'informations de conversion (180) est en outre configurée pour :
spécifier les informations de conversion (582) sur la base d'une instruction pour laquelle une condition d'exécution est remplie et du type du dispositif de relais (200, 200A, 200a, 200b), et
l'unité de réglage de communication (160, 160A, 160b) est en outre configurée pour :
interpréter la commande dans une instruction interprétable par le dispositif de relais (200, 200A, 200a, 200b) sur la base des informations de conversion (582).

2. Dispositif de commande (100, 100A, 100a, 100b) selon la revendication 1,
dans lequel le dispositif de commande (100, 100A, 100a, 100b) est connecté en communication à un premier appareil (41a) configuré pour gérer un premier groupe de dispositifs de terrain et à un deuxième appareil (41c) configuré pour gérer un deuxième groupe de dispositifs de terrain via le dispositif de relais (200, 200A, 200a, 200b),
l'unité de stockage (106, 106A) stocke une première recette (1068a) comportant une condition pour déplacer le premier groupe de dispositifs de terrain et une deuxième recette (1068c) comportant une condition pour déplacer le deuxième groupe de dispositifs de terrain, et
le programme utilisateur (1066, 1066A, 1066a) comporte une instruction pour une commutation d'un dispositif servant de destination de connexion et une instruction pour commuter la recette en fonction de la commutation.

3. Dispositif d'aide pour aider au développement d'un programme utilisateur (1066, 1066A, 1066a) pour un dispositif de commande (100, 100A, 100a, 100b) capable de communiquer avec d'autres dispositifs (4a, 41A, 41B, 41C, 41a, 41b, 41c) via un dispositif de relais (200, 200A, 200a, 200b), le dispositif d'aide comprenant :
une unité de stockage (106, 106A) configurée pour stocker au moins une instruction pour réaliser des réglages de communication en ce qui concerne une communication via le dispositif de relais (200, 200A, 200a, 200b) ; et
une unité de commande (31) configurée pour combiner l'au moins une instruction stockée dans l'unité de stockage (106, 106A) et générer le programme utilisateur (1066, 1066A, 1066a),
dans lequel l'unité de commande (31) crée le programme utilisateur (1066, 1066A, 1066a) dans un format permettant au dispositif de commande (100, 100A, 100a, 100b) de réaliser une transmission ou une réception d'une commande à destination ou en provenance du dispositif de relais (200, 200A, 200a, 200b) à un moment d'exécution de l'instruction,
dans lequel le dispositif d'aide est **caractérisé en ce que**
le programme utilisateur (1066, 1066A, 1066a) comporte une instruction liée aux réglages de communication et une instruction préférentielle présentant une priorité supérieure à l'instruction,
le dispositif de commande (100, 100A, 100a, 100b) comprend en outre une unité d'exécution de tâche à cycle fixe (140) configurée pour exécuter à répétition l'instruction préférentielle à un cycle fixe, et
une unité de réglage de communication (160, 160A, 160b) émet l'instruction liée aux réglages de communication de manière à ne pas gêner l'exécution de l'instruction préférentielle,
dans lequel un protocole pour la transmission ou la réception de la commande à destination ou en provenance du dispositif de relais (200, 200A, 200a, 200b) diffère selon un type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) selon le protocole correspondant au type du dispositif de relais (200, 200A, 200a, 200b),
dans lequel l'unité de stockage (106, 106A) stocke des informations de conversion (582) comportant le protocole pour chaque type du dispositif de relais (200, 200A, 200a, 200b), et
le dispositif de commande (100, 100A, 100a, 100b) comprend en outre :
une unité de spécification d'informations de conversion (180) configurée pour :
déterminer le type du dispositif de relais (200, 200A, 200a, 200b) sur la base d'informations de dispositif (260) incluses dans le dispositif de relais (200, 200A, 200a, 200b), dans lequel les informations de dispositif (260) comprennent une adresse de commande d'accès au support ; et
spécifier les informations de conversion (582) sur la base du type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) sur la base des informations de conversion (582) spécifiées par l'unité de spécification d'informations de conversion (180),
dans lequel les informations de conversion (582) sont stockées dans l'unité de stockage (106, 106A) pour chaque élément de contenu de l'instruction, et
l'unité de spécification d'informations de conversion (180) est en outre configurée pour :
spécifier les informations de conversion (582) sur la base d'une instruction pour laquelle une condition d'exécution est remplie et du type du dispositif de relais (200, 200A, 200a, 200b), et
l'unité de réglage de communication (160, 160A, 160b) est en outre configurée pour :
interpréter la commande dans une instruction interprétable par le dispositif de relais (200, 200A, 200a, 200b) sur la base des informations de conversion (582).

4. Système de communication comprenant :
un dispositif de relais (200, 200A, 200a, 200b) ; et
un dispositif de commande (100, 100A, 100a, 100b) capable de communiquer avec d'autres dispositifs (4a, 41A, 41B, 41C, 41a, 41b, 41c) via le dispositif de relais (200, 200A, 200a, 200b),
dans lequel le dispositif de commande (100, 100A, 100a, 100b) comporte :
une unité de stockage (106, 106A) configurée pour stocker un programme utilisateur (1066, 1066A, 1066a) comportant au moins une instruction pour réaliser des réglages de communication en ce qui concerne une communication via le dispositif de relais (200, 200A, 200a, 200b) ; et
une unité de réglage de communication (160, 160A, 160b) configurée pour réaliser une transmission ou une réception d'une commande à destination ou en provenance du dispositif de relais (200, 200A, 200a, 200b) sur la base de l'accomplissement d'une condition d'exécution pour l'instruction et pour réaliser les réglages de communication indiqués par l'instruction,
dans lequel le système de communication est **caractérisé en ce que**
le programme utilisateur (1066, 1066A, 1066a) comporte une instruction liée aux réglages de communication et une instruction préférentielle présentant une priorité supérieure à l'instruction,
le dispositif de commande (100, 100A, 100a, 100b) comprend en outre une unité d'exécution de tâche à cycle fixe (140) configurée pour exécuter à répétition l'instruction préférentielle à un cycle fixe, et
l'unité de réglage de communication (160, 160A, 160b) émet l'instruction liée aux réglages de communication de manière à ne pas gêner l'exécution de l'instruction préférentielle,
dans lequel un protocole pour la transmission ou la réception de la commande à destination ou en provenance du dispositif de relais (200, 200A, 200a, 200b) diffère selon un type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) selon le protocole correspondant au type du dispositif de relais (200, 200A, 200a, 200b),
dans lequel l'unité de stockage (106, 106A) stocke des informations de conversion (582) comportant le protocole pour chaque type du dispositif de relais (200, 200A, 200a, 200b), et
le dispositif de commande (100, 100A, 100a, 100b) comprend en outre :
une unité de spécification d'informations de conversion (180) configurée pour :
déterminer le type du dispositif de relais (200, 200A, 200a, 200b) sur la base d'informations de dispositif (260) incluses dans le dispositif de relais (200, 200A, 200a, 200b), dans lequel les informations de dispositif (260) comprennent une adresse de commande d'accès au support ; et
spécifier les informations de conversion (582) sur la base du type du dispositif de relais (200, 200A, 200a, 200b), et
l'unité de réglage de communication (160, 160A, 160b) est configurée pour :
réaliser la transmission ou la réception de la commande à destination ou en provenance du dispositif de relais (200, 200A, 200a, 200b) sur la base des informations de conversion (582) spécifiées par l'unité de spécification d'informations de conversion (180),
dans lequel les informations de conversion (582) sont stockées dans l'unité de stockage (106, 106A) pour chaque élément de contenu de l'instruction, et
l'unité de spécification d'informations de conversion (180) est en outre configurée pour :
spécifier les informations de conversion (582) sur la base d'une instruction pour laquelle une condition d'exécution est remplie et du type du dispositif de relais (200, 200A, 200a, 200b), et
l'unité de réglage de communication (160, 160A, 160b) est en outre configurée pour :
interpréter la commande dans une instruction interprétable par le dispositif de relais (200, 200A, 200a, 200b) sur la base des informations de conversion (582).
